(19) **Europäisches Patentamt / European Patent Office / Office européen des brevets**

(11) **EP 4 164 146 B1**

(12) **EUROPEAN PATENT SPECIFICATION**

(45) Date of publication and mention
of the grant of the patent:
**22.10.2025 Bulletin 2025/43**

(21) Application number: **22202553.8**

(22) Date of filing: **21.06.2017**

(51) International Patent Classification (IPC):
$H04B\ 17/336^{(2015.01)}$   $H04B\ 17/345^{(2015.01)}$
$H04B\ 17/24^{(2015.01)}$   $H04B\ 7/0417^{(2017.01)}$
$H04B\ 7/06^{(2006.01)}$

(52) Cooperative Patent Classification (CPC):
**H04B 17/336; H04B 7/0417; H04B 7/0689;
H04B 7/0697; H04B 17/24; H04B 17/345**

(54) **INTERFERENCE MEASUREMENTS AND CHANNEL STATE INFORMATION (CSI) FEEDBACK IN A MASSIVE MULTIPLE-INPUT MULTIPLE-OUTPUT (MIMO) SYSTEM**

INTERFERENZMESSUNGEN UND RÜCKKOPPLUNG VON KANALZUSTANDSINFORMATIONEN (CSI) IN EINEM MASSIVEN MULTIPLE-INPUT-MULTIPLE-OUTPUT (MIMO)-SYSTEM

MESURES D'INTERFÉRENCE ET RÉTROACTION D'INFORMATIONS D'ÉTAT DE CANAL (CSI) DANS UN SYSTÈME À ENTRÉES MULTIPLES ET SORTIES MULTIPLES (MIMO) MASSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2016 US 201662353451 P
24.06.2016 PCT/CN2016/087048**

(43) Date of publication of application:
**12.04.2023 Bulletin 2023/15**

(62) Document number(s) of the earlier application(s) in
accordance with Art. 76 EPC:
**17735295.2 / 3 476 066**

(73) Proprietor: **Apple Inc.
Cupertino, CA 95014 (US)**

(72) Inventors:
- **ZHANG, Yushu
Beijing 100190 (CN)**
- **ZHU, Yuan
Beijing Heilongjiang 100012 (CN)**
- **CHANG, Wenting
Beijing 100190 (CN)**
- **LI, Qinghua
San Ramon, CA 94582 (US)**

- **CHEN, Xiaogang
Portland, OR 97229 (US)**
- **NIU, Huaning
San Jose, CA 95120 (US)**
- **XIONG, Gang
Portland, OR 97229 (US)**

(74) Representative: **Lang, Johannes
Bardehle Pagenberg Partnerschaft mbB
Patentanwälte, Rechtsanwälte
Prinzregentenplatz 7
81675 München (DE)**

(56) References cited:
- **NORTEL: "Further Discussion on DL/UL
Signaling Channel Supporting Rank Adaptation
for High Mobility UE", 3GPP DRAFT;
R1-080769(NORTEL-
RANK_ADAPTATION_SIGNALING), 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Sorrento,
Italy; 20080206, 6 February 2008 (2008-02-06),
XP050109253**

EP 4 164 146 B1

**Description**

**BACKGROUND**

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE) Release 8, 9, 10, 11, 12 and 13, the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

The 3GPP document "Further Discussion on DL/UL Signaling Channel Supporting Rank Adaptation for High Mobility UE", 3GPP DRAFT; R1-080769 discloses an UE operation to be classified to a high mobility open-loop mode and a low mobility close-loop mode based on UE speed prior to UE measurements. The UE then performs CQI measurements and transmits the measurement results together with feedback information including selected MIMO transmission rank and/or PMI based on either the high/low mobility mode. Then, the eNodeB determines the MIMO format based on the feedback information and schedules and performs DL transmissions.

**BRIEF** DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:

FIG. 1 illustrates signaling between an eNodeB and a user equipment (UE) that enables the UE to perform interference measurements in a massive multiple-input multiple-output (MIMO) system in accordance with an example;

FIG. 2 is a table that includes a plurality of possible values for an interference management flag in accordance with an example;

FIG. 3 illustrates an xPDSCH-based interference measurement framework in accordance with an example;

FIG. 4 illustrates signaling between an eNodeB and a user equipment (UE) in which the UE recommends a massive multiple-input multiple-output (MIMO) scheme to the eNodeB in accordance with an example;

FIG. 5 is a table that includes a plurality of possible values for a multiple-input multiple-output (MIMO) scheme indicator in accordance with an example;

FIG. 6 illustrates signaling between an eNodeB and a user equipment (UE) in which the eNodeB configures a massive multiple-input multiple-output (MIMO) scheme for the UE in accordance with an example;

FIG. 7 is a table that includes a plurality of possible values for a multiple-input multiple-output (MIMO) scheme restriction indicator in accordance with an example;

FIG. 8 illustrates signaling between an eNodeB and a user equipment (UE) in which the eNodeB selects a massive multiple-input multiple-output (MIMO) scheme for the UE in accordance with an example;

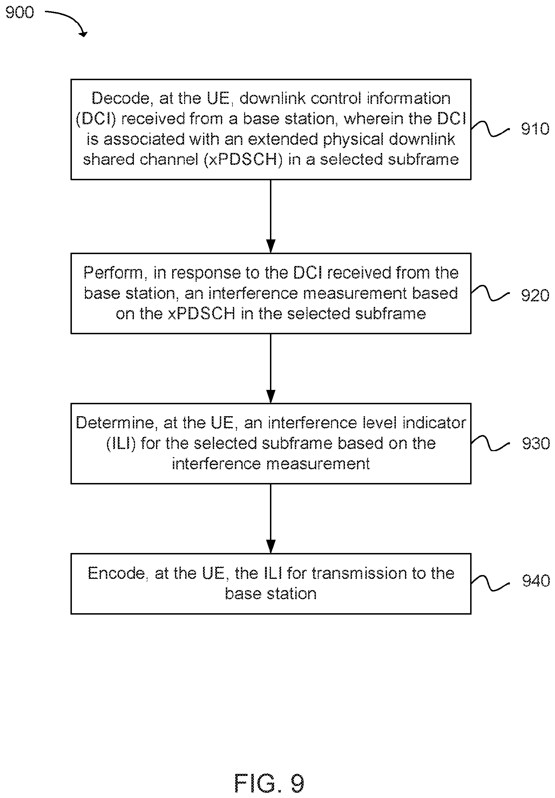

FIG. 9 depicts functionality of a user equipment (UE) operable to perform interference measurements in a massive multiple-input multiple-output (MIMO) system in accordance with an example;

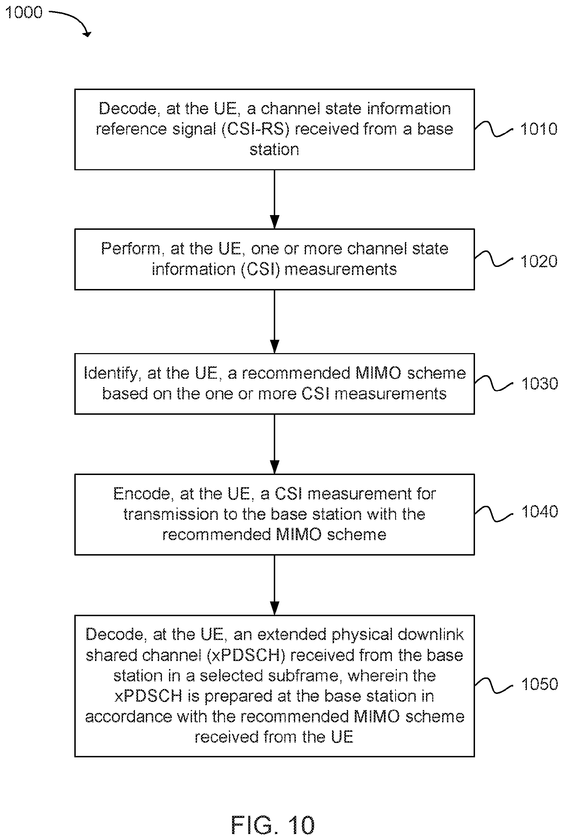

FIG. 10 depicts functionality of a user equipment (UE) operable to select a multiple-input multiple-output (MIMO) scheme for a massive MIMO system in accordance with an example;

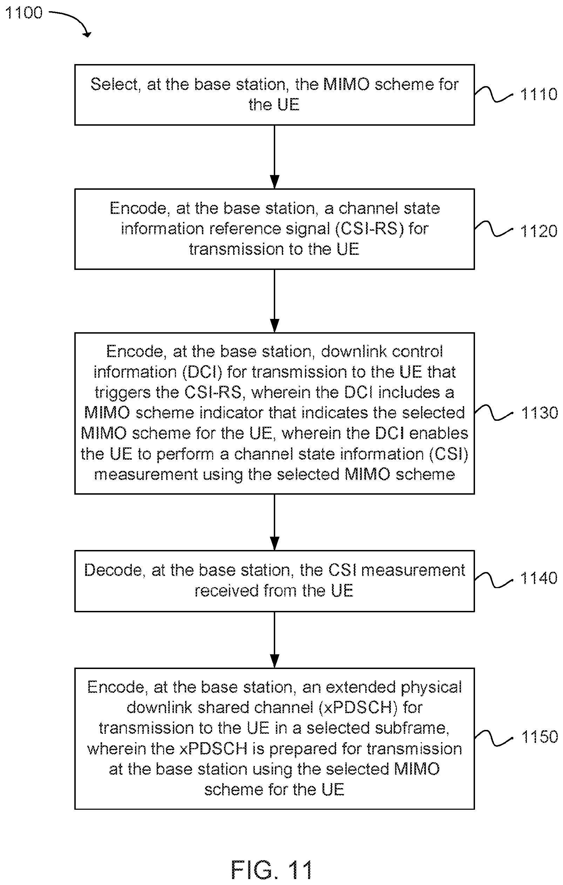

FIG. 11 depicts functionality of a base station operable to configure a multiple-input multiple-output (MIMO) scheme for a user equipment (UE) in a massive MIMO system in accordance with an example;

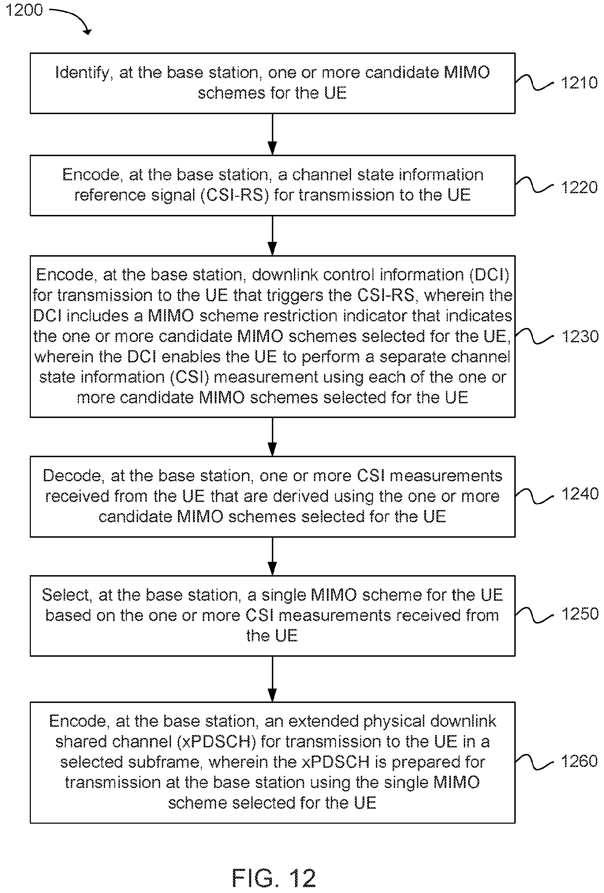

FIG. 12 depicts functionality of a base station operable to configure one or more multiple-input multiple-output (MIMO) schemes for a user equipment (UE) in a massive MIMO system in accordance with an example;

FIG. 13 illustrates an architecture of a wireless network in accordance with an example;

FIG. 14 illustrates a diagram of a wireless device (e.g., UE) in accordance with an example;

FIG. 15 illustrates interfaces of baseband circuitry in accordance with an example; and

FIG. 16 illustrates a diagram of a wireless device (e.g., UE) in accordance with an example.

The invention is set out in independent claims 1, 4 and 7. Further embodiments are set out in the dependent claims.

Reference will now be made to the exemplary embodiments illustrated, and specific language will be used herein to describe the same. It will nevertheless be understood that no limitation of the scope of the technology is thereby intended.

DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

**EXAMPLE EMBODIMENTS**

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Multiple-input multiple-output (MIMO) antenna technology has been incorporated into wireless broadband standards, such as 3GPP LTE and Wi-Fi. When a transmitter/receiver is equipped with an increased number of antennas, there can be more possible signal paths and improved performance in terms of data rate and link reliability. Massive MIMO (also known as large-scale antenna systems, very large MIMO, hyper MIMO or full-dimension MIMO) utilizes a very large number of service antennas (e.g., hundreds or thousands) that operate fully coherently and adaptively. The increased number of antennas can focus the transmission and reception of signal energy into smaller regions of space, which can provide improvements in throughput and energy efficiency. Massive MIMO can be used with time division duplex (TDD) operation or frequency division duplex (FDD) operation.

In one configuration, massive MIMO can be applied in a Fifth Generation (5G) wireless communication system that uses a hybrid beamforming architecture. The hybrid beamforming can include an analog beamforming and digital precoder. Based on a multiple beams approach, an eNodeB can transmit reference signals with different beams, which can be measured by a user equipment (UE). The UE can select one beam to access based on the reference signals. The selected beam can correspond to a beam with a highest receiving power observed by the UE. After the UE selects the beam with the highest receiving power, the eNodeB can determine the beam based on UE feedback.

In one example, a channel state information reference signal (CSI-RS) can allow the UE to measure the channel and select the digital precoder, as well as allow the UE to provide channel quality indicator (CQI) feedback. However, when the multiple beam approach is used, there can be no opportunity for the eNodeB to transmit periodic CSI-RS, as this would entail a large overhead to apply all beams in one CSI-RS subframe. As a result, the CSI-RS can be aperiodic when the multiple beam approach is used. In addition, the CSI-RS can be UE specific and triggered by a single downlink control information (DCI). However, when interference averaging is enabled, multiple DCIs and UE specific CSI-RSs can be transmitted, which increases a control signaling overhead.

In one example, reciprocity-based CSI feedback can be an alternative mechanism in the CSI measurement framework. For example, when reciprocity confirmed, the UE may not report a CSI-RS resource index (CRI), rank indicator (RI) or precoder matrix indicator (PMI), as the eNodeB can already know about the channel (as a downlink and uplink channel environment can be assumed to be the same). The CRI can be used to indicate an analog beam index, which can be obtained by an uplink signal, e.g., a 5G sounding reference signal (xSRS), or a beam reference signal receiving power (BRS-RP) report. The RI and the PMI can be used to determine the digital precoder. A direction of the digital precoder can be determined based on an uplink receiving direction as a result of the reciprocity. Hence, for the reciprocity-based CSI feedback framework, it can be problematic to obtain information about the CQI or interference level, and it can be difficult to determine a rank of the digital precoder without knowledge of the interference level.

As described in further detail below, a Fifth Generation (5G) physical downlink shared channel (PDSCH) (xPDSCH) based interference measurement or CQI measurement framework can be utilized by the eNodeB and the UE. The interference measurement can be obtained when the reciprocity-based CSI feedback framework is utilized by the eNodeB and the UE.

In one configuration, in a multiple beams system that utilizes the multiple beam approach, the eNodeB can select the analog beam, digital precoder and modulation and coding scheme (MCS) when transmitting the xPDSCH. If the reciprocity can be confirmed, the eNodeB can obtain information about the analog beam and a transmitting direction from an uplink signal from the UE. The eNodeB can obtain an interference level, and then the eNodeB can select the rank of precoder as well as the MCS.

In one configuration, in an interference measurement framework for multi-beam operation, the UE and the eNodeB can have a number of beams. Different CQIs can be observed from different network (NW)-UE beam pairs. Therefore, to enable interference averaging, the UE can know whether a measured interference is from a same NW-UE beam pair.

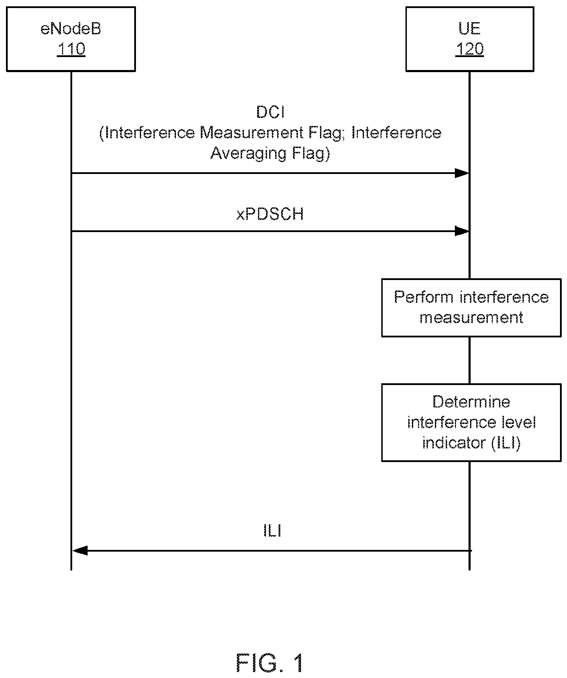

FIG. 1 illustrates exemplary signaling between an eNodeB 110 and a user equipment (UE) 120 that enables the UE 120 to perform interference measurements in a Fifth Generation (5G) massive multiple-input multiple-output (MIMO) system. The eNodeB 110 can transmit downlink control information (DCI) to the UE 120. The DCI can trigger a 5G physical downlink shared channel (xPDSCH) transmission between the eNodeB 110 and the UE 120 in a subframe.

In one example, for DCI that is used to trigger the xPDSCH transmission, an interference measurement flag can be included in the DCI. The interference measurement flag can inform the UE whether to measure an interference based on a reference signal received via the xPDSCH in the same subframe (i.e., the current xPDSCH). For example, the interference measurement flag can be a 1-bit value, wherein a first value can denote that no interference measurement is needed and a second value can denote that interference measurement based on the current xPDSCH is enabled. In other words, the first value can denote that the UE 120 is to perform the interference measurement based on a reference signal in the xPDSCH in the same subframe, and the second value can denote that the UE 120 is to not perform the interference measurement based on the reference signal in the xPDSCH in the same subframe.

In another example, for DCI that is used to trigger the xPDSCH transmission, an interference averaging flag can be included in the DCI. The interference averaging flag can inform the UE as to whether interference averaging is enabled or not enabled. For example, the interference averaging flag can be a 1-bit value, wherein a first value can denote that interference averaging is stopped and a second value can denote that interference averaging is not stopped (i.e., interference averaging is continued). In other words, the first value can denote that interference measurement averaging is stopped at the UE 120, and the second value can denote that interference measurement averaging is continued at the UE 120.

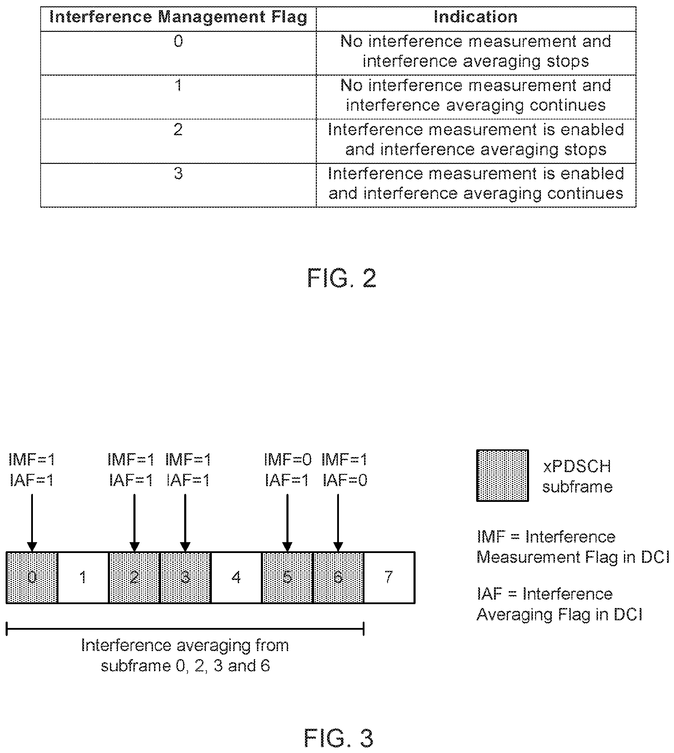

FIG. 2 is an exemplary table that includes a plurality of possible values for an interference management flag. The interference management flag can include 2 bits, and the interference management flag can inform the UE whether to measure an interference based on an xPDSCH in a same subframe (i.e., a current xPDSCH), and the interference management flag can inform the UE as to whether interference averaging is enabled or not enabled. For example, a first value can denote that the interference measurement is disabled at the UE 120 and that interference measurement averaging is stopped at the UE, a second value can denote that the interference measurement is disabled at the UE 120 and that interference measurement averaging is continued at the UE 120, a third value can denote that the interference measurement is enabled at the UE 120 and that interference measurement averaging is stopped at the UE 120, or a fourth value to denote that the interference measurement is enabled at the UE 120 and that interference measurement averaging is continued at the UE 120.

Referring back to FIG. 1, the UE 120 can receive the DCI (which includes the interference measurement flag and the interference averaging flag) and the xPDSCH in the subframe from the eNodeB 110. The UE 120 can perform, in response to the DCI that triggers the xPDSCH, an interference measurement based on the reference signal received via the xPDSCH in the same subframe. The UE 120 can perform the interference measurement in accordance with the interference measurement flag and the interference averaging flag included in the DCI. More specifically, the UE can perform the interference measurement ($r_k$) in accordance with $r_k = Y_k - \tilde{H}_k X_k$ for subcarrier k, wherein $Y_k$ is a $N_{rx} \times 1$ receiving signal, $\tilde{H}_k$ is a $N_{rx} \times N_{tx}$ estimated effective channel, $X_k$ is a $N_{tx} \times 1$ reference signal, $N_{rx}$ is a number of receiving antenna ports, and $N_{tx}$ is a number of transmitting antenna ports. In other words, for subcarrier k, receiving interference can be estimated as $r_k = Y_k - \tilde{H}_k X_k$.

In one example, the UE 120 can calculate a reported interference based on the interference measurement. More specifically, the UE 120 can calculate the reported interference based on an averaging of each subcarrier and each receiving antenna. The UE 120 can calculate the reported interference (e) in accordance with:

$$e = \frac{1}{N \times N_{rx}} \sum_{k=0}^{N-1} \sum_{j=1}^{N_{rx}} \frac{|r_k(j,1)|^2}{\sum_{i=1}^{N_{tx}} |\tilde{H}_k(j,i)|^2},$$

wherein N indicates a number of scheduled subcarriers. Then, the UE 120 can quantize the interference (e) into K, e.g., K=5 bits. In other words, the UE can quantize the interference measurement into N bits, wherein N is a positive integer. The UE 120 can report an interference level indicator (ILI) to the eNodeB 110, which can be a quantized value of *(e)*. In other words, the UE 120 can calculate the ILI for the subframe based on a quantization of the interference measurement into N bits, and the ILI can be calculated based on the averaging of the one or more subcarriers k and the one or more receiving antennas. After the UE 120 calculates the ILI, the UE 120 can transmit or report the ILI to the eNodeB 110. The UE 120 can transmit the ILI to the eNodeB 110 to enable a reduction in CSI-RS overhead.

In one example, the UE 120 can transmit the ILI to the eNodeB 110 via an extended physical uplink shared channel (xPUSCH) or an extended physical uplink control channel (xPUCCH). In another example, the UE 120 can transmit the ILI to the eNodeB 110 when an interference measurement averaging at the UE 120 is stopped. In yet another example, the UE 120 can transmit the ILI to the eNodeB 110 based on an interference report flag included in the DCI. In a further example, the UE 120 can transmit the ILI to the eNodeB 110 along with a hybrid automatic repeat request (HARQ) acknowledgement (ACK) or negative ACK (NACK) transmission.

In one example, an interference report flag can be included in the DCI used to trigger the xPDSCH transmission. The interference report flag can be a 1-bit value, wherein a first value indicates that an ILI report transmission is disabled and a second value indicates that an ILI report transmission is enabled. In other words, the interference report flag can indicate to the UE 120 whether the UE 120 is enabled to transmit the ILI report to the eNodeB 110 or not enabled to transmit the ILI report to the eNodeB 110.

FIG. 3 illustrates an exemplary xPDSCH-based interference measurement framework. A user equipment (UE) and an eNodeB can communicate with each other in a plurality of subframes. In this example, the subframes can range from subframe#0 to subframe#7. Certain subframes in the plurality of subframes can be xPDSCH subframes. In this example, subframe#0, subframe#2, subframe#3, subframe#5 and subframe#6 can correspond to xPDSCH subframes. In other words, subframe#0, subframe#2, subframe#3, subframe#5 and subframe#6 can each correspond with an xPDSCH transmission from the eNodeB to the UE, whereas the remaining subframes are not associated with xPDSCH transmissions from the eNodeB to the UE.

In one example, each of the xPDSCH subframes can be associated with an interference measurement flag (IMF) in downlink control information (DCI), as well as an interference averaging flag (IAF) in DCI. For example, the IMF can be set to '0' to indicate that an interference measurement is disabled at the UE for the corresponding xPDSCH subframe, and the IMF can be set to '1' to indicate that an interference measurement is enabled at the UE for the corresponding xPDSCH subframe. In addition, the IAF can be set to '0' to indicate that interference averaging is stopped at the UE, and the IAF can be set to '1' to indicate that interference averaging is continued at the UE.

In this example, subframe#0 can be associated with an IMF value of '1' and an IAF value of '1', subframe#2 can be associated with an IMF value of '1' and an IAF value of '1', and subframe#3 can be associated with an IMF value of '1' and an IAF value of '1'. In other words, for subframe#0, subframe#2 and subframe#3, the interference measurement can be enabled at the UE and the interference averaging is continued at the UE. In this example, subframe#5 can be associated with an IMF value of '0' and an IAF value of '1'. In other words, the interference measurement is disabled at the UE in subframe#5, which may be a result of narrowband scheduling or multiple user (MU) MIMO scheduling. In addition, subframe#6 can be associated with an IMF value of '1' and an IAF value of '0'. In other words, the interference measurement can be enabled at the UE and the interference averaging can be stopped at the UE in subframe#6. Therefore, in this example, the UE can measure the interference in subframe#0, subframe#2, subframe#3 and subframe#6.

In one configuration, to support MU-MIMO interference measurements and/or to maintain CSIs for multiple network beams (which can be useful to enable flexible scheduling and beam aggregation), there can be multiple interference measurement processes. For example, the UE can execute multiple interference measurement processes to support one or more of: multi-user (MU) MIMO or single-user (SU) MIMO. In this example, one process can be used for SU-MIMO and another process (or remaining processes) can be used for MU-MIMO with different dimensions or paired directions.

In one example, different processes can be used for different network beams. For example, a first process (process 1) can be used for current network beam based measurements, and a second process (process 2) can be used for candidate network beam based measurements. The candidate network beam can be a beam which can be switched to, or the candidate network beam can be a beam which can assist the current network beam for beam aggregation.

In one example, the DCI can include an interference measurement process identifier (ID) for a selected interference measurement process at the UE, and the UE can be configured to report the ILI for the selected interference measurement process based on the interference measurement process ID included in the DCI. The interference measurement process ID can be added in the DCI used to trigger the xPDSCH transmission. As an example, there can be four interference measurement processes: a first process can be for SU-MIMO and the other three processes can be for MU-MIMO with dimension 2, 3 and 4 (and above). The UE can perform the interference averaging for each interference measurement process independently. In one example, there can be one IAF as well as an interference measurement process ID in the DCI. As an example, when IAF=0, the interference averaging for the corresponding process can be stopped, and when IAF=1, the interference averaging for the corresponding process can be enabled. In addition, a maximum number of interference measurement processes can be pre-defined by the 5G massive MIMO system in the wireless communication system, or the maximum number of interference measurement processes can be configured by higher layer signaling.

In one configuration, a user equipment (UE) can process control signaling for an interference measurement. The UE can measure and quantize the interference measurement based on a 5G physical downlink shared channel (xPDSCH). The UE can report an interference level indicator (ILI) to an eNodeB via a 5G physical uplink shared channel (xPUSCH) or a 5G physical uplink control channel (xPUCCH).

In one example, an interference measurement flag can be added in downlink control information (DCI) used to trigger the xPDSCH transmission, and the interference measurement flag can indicate whether the UE is to measure the interference from the xPDSCH transmission (i.e., a current xPDSCH). In another example, an interference averaging flag can be added in the DCI used to trigger the xPDSCH transmission, and the interference averaging flag can be used to indicate whether interference averaging is in progress or is stopped. In yet another example, an interference management flag can be added in the DCI to indicate whether the interference measurement is enabled and whether interference averaging is in progress or is stopped.

In one example, the interference can be measured from the xPDSCH and quantized in N bits, wherein N is a positive integer. In another example, the ILI can be reported when interference averaging is stopped. In yet another example, the ILI can be reported when it is indicated by an interference report flag in the DCI. In addition, the ILI can be reported associated with an acknowledgement (ACK) or negative acknowledgement (NACK) by the xPUCCH.

In one example, multiple interference measurement processes can be configured by the eNodeB and an interference measurement process ID can be indicated by the DCI. In another example, the UE can report the ILI for an interference measurement process, whose process ID can be indicated by the DCI to trigger the ILI report. In yet another example, the UE can report all the ILIs for all the interference measurement processes when triggered.

In one configuration, massive MIMO can be applied in the 5G wireless communication system, in which analog beamforming can be used at both the eNodeB and the UE. The eNodeB can maintain a plurality of network beams. The UE can select one network beam to access from the plurality of network beams, and the UE can start receiving downlink signals from that network beam. Different network beams can be applied to different CSI-RS resources, and the UE can measure the CSI for different network beams.

In one configuration, the 5G wireless communication system can implement one or more of the following MIMO schemes: closed-loop/(semi)open-loop spatial multiplexing, single/multi-point transmissions, SU/MU-MIMO, transmit diversity (e.g., single/multi panel spatial diversity), etc. In LTE, the MIMO schemes can be determined by a transmission mode (TM), which can be configured by higher layer signaling. However, in the 5G wireless communication system, the MIMO scheme can be configured by DCI, which can allow the system to be more flexible and have low latency when switching between MIMO schemes. As a result, differentiating the CSI for different MIMO schemes can become difficult for CSI feedback.

As described in further detail below, the UE can report the CSI with different MIMO schemes. In a first example, the UE can report the CSI when the UE recommends the MIMO scheme. In a second example, the UE can report the CSI when the eNodeB configures the MIMO scheme for the UE. In a third example, the UE can report the CSI for all/partial MIMO schemes.

In previous solutions, in the CSI-RS, different network beams can be applied to different CSI-RS resources. In one subframe, in which the CSI-RS is enabled, there can be $N_l$, e.g., $N_l$ = 2 symbols and there can be $N_r$, e.g., $N_r$ = 4 CSI-RS resources in one symbol. Therefore, the UE can measure in total the CSI $N_r \times N_l$ for network beams. In previous solutions, a CSI report from the UE can include the one or two CSI-RS resource indicators (CRIs), a rank indicator (RI), and a precoding matrix indicator (PMI), and a channel quality indicator (CQI) that is reported can be associated with one CRI. Thus, the eNodeB can receive information on recommended network beams reported from the UE, as well as the digital precoder and the CQI. However, to support a flexible MIMO scheme, it is desirable for the UE to report the CSI with different MIMO schemes.

In one configuration, the UE can consider various MIMO schemes and report the CSI to the eNodeB with a recommended MIMO scheme. For example, the UE can measure the CSI with different MIMO schemes, and then report the CSI with the recommended MIMO scheme. The MIMO scheme recommended by the UE can be one of: closed-loop/(semi)open-loop spatial multiplexing, single/multi-point transmissions, SU/MU-MIMO, or transmit diversity (e.g., single/multi panel spatial diversity). In one example, when a frequency offset is high (e.g., due to a high moving speed), the UE can recommend the open loop MIMO scheme. The open loop MIMO scheme can be transmit diversity or large delay CDD for one network beam, or the open loop MIMO scheme can be analog beam cycling in different resource blocks (RBs) or resource block groups (RBGs). In another example, when the frequency offset is low and a signal to noise ratio (SINR) is high, the UE can recommend the closed-loop MIMO scheme.

In one example, the CSI can be in accordance with a CSI format 1 or a CSI format 2. CSI Format 1 can be used for CSI measured from a particular network beam, whereas CSI format 2 can be used for CSI measured from cycling network beams.

In one example, the CSI format 1 can include one or more of: a CSI format flag in which a first value denotes CSI format 1 and a second value denotes CSI format 2, CSI for one network beam or dual network beams, or zero padding. For a single beam operation based system, the CSI can include one CRI and RI/PMI/CQI, as well as zero padding. When joint precoding among T, e.g., T>1 antenna panels is enabled, the CSI can conclude the RI/PMI/CQI estimated from a $T \times N_p$ antenna ports codebook, where $N_p$ denotes a number of radio frequency (RF) chains in one antenna panel. Here, the one value of PMI can include the transmit diversity (for rank 1) or large delay cyclic delay diversity (CDD) (rank 2), and a certain amount of padding can be added when a length of a different format is not the same. In another example, the CSI format 2 can include one or more of: a CSI format flag in which a first value denotes CSI format 1 and a second value denotes CSI format 2, CRIs for selected network beams, RI/CQI for the selected cycling network beams, or zero padding. The CRIs for the selected cycling network beams can denote the selected beams from which the CQI and RI are obtained, wherein the number of selected network beams can be equal to $N_r$ or pre-defined by the system or configured by higher layer signaling or DCI.

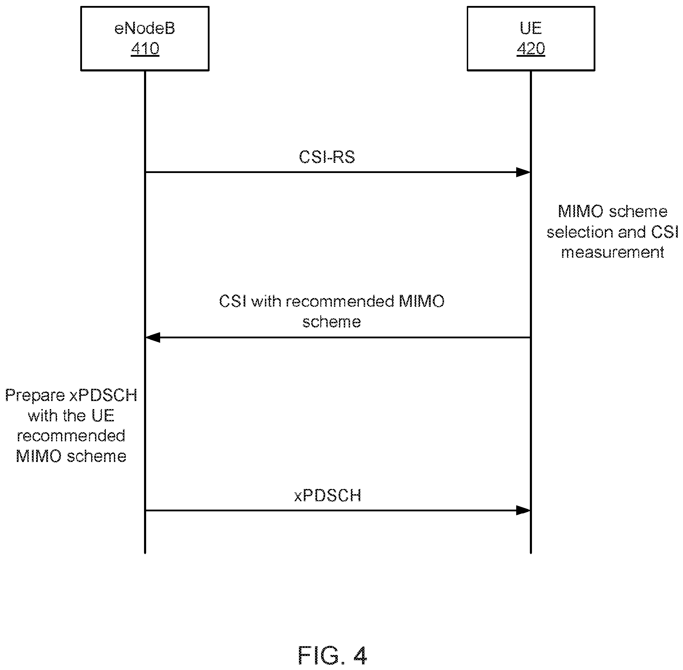

FIG. 4 illustrates exemplary signaling between an eNodeB 410 and a user equipment (UE) 420 in which the UE 420 recommends a massive multiple-input multiple-output (MIMO) scheme to the eNodeB 410. The eNodeB 410 and the UE 420 can operate in a multiple-beam massive MIMO system implemented in a 5G wireless communication system. In one example, the UE 420 can receive a channel state information reference signal (CSI-RS) from the eNodeB 410. The UE 420 can perform one or more channel state information (CSI) measurements based on the CSIRS received from the eNodeB 410. The UE 420 can identify a recommended MIMO scheme based on the one or more CSI measurements. In a more specific example, the UE 420 can perform the one or more CSI measurements using different MIMO schemes, and then identify the recommended MIMO scheme based on the one or more CSI measurements using the different MIMO schemes. The recommended MIMO scheme can be one of: a closed-loop MIMO scheme that utilizes closed-loop spatial multiplexing, an open-loop MIMO scheme that utilizes transmit diversity or large delay cyclic delay diversity (CDD), or an open-loop MIMO scheme that utilizes analog beam cycling.

As an example, the UE 420 can identify the open-loop MIMO scheme as the recommended MIMO scheme when a frequency offset is increased due to an increased moving speed, or the UE 420 can identify the closed-loop MIMO scheme as the recommended MIMO scheme when the frequency offset is decreased and a signal-to-noise ratio (SINR) is increased.

In one example, the UE 420 can transmit a CSI measurement to the eNodeB 410 with the recommended MIMO scheme. The CSI measurement can be associated with a format 1 when the CSI is measured from a particular network beam, or the CSI measurement can be associated with a format 2 when the CSI is measured from cycling network beams, wherein format 1 includes one or more of: a CSI format flag, CSI for one network beam or a dual network beam or zero padding, wherein format 2 includes one or more of: a CSI format flag, CSI-RS resource indexes (CRIs) for selected cycling network beams, rank indicator (RI) or channel quality indicator (CQI) for the selected cycling network beams or zero padding. The eNodeB 410 can receive the CSI measurement with the recommended MIMO scheme from the UE 420, and the eNodeB 410 can prepare an extended physical downlink shared channel (xPDSCH) for transmission to the UE 420 in a selected subframe in accordance with the recommended MIMO scheme received from the UE 420. The UE 420 can receive the xPDSCH transmission from the eNodeB 410 in the selected subframe, and the xPDSCH transmission can be in accordance with the recommended MIMO scheme that was previously selected at the UE 420.

In one configuration, an eNodeB can configure a MIMO scheme for a UE, which can cause the UE to report CSI to the eNodeB using the MIMO scheme configured by the eNodeB. In this configuration, the eNodeB can select the MIMO scheme for the UE without explicit indication by the UE. As an example, the eNodeB can estimate the UE's moving speed based on an uplink reference signal, such as SRS, and then the eNodeB can select the analog beam cycling scheme for the UE if a Doppler frequency offset is high. As another example, if a beam reference signal receiving power (BRS-RP) is low (which indicates that the UE may be located in a cell edge), the eNodeB can select the transmit diversity or large delay CDD, as a reported precoder may not be accurate enough due to channel estimation error in a low SINR case. As explained, in these situations, the eNodeB can select the MIMO scheme for the UE and communicate the selected MIMO scheme to the UE, and then the UE can utilize the selected MIMO scheme when reporting the CSI to the eNodeB.

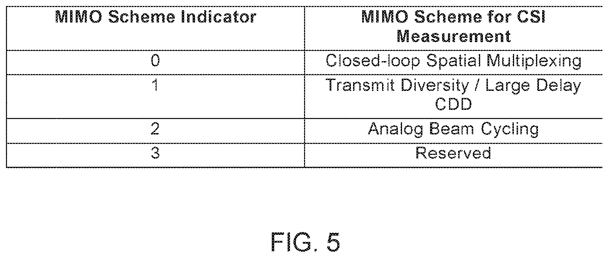

FIG. 5 is an exemplary table that includes a plurality of possible values for a multiple-input multiple-output (MIMO) scheme indicator. The MIMO scheme indicator can be included in downlink control information (DCI) that is communicated from an eNodeB to a UE, and the DCI can be used to trigger a CSI-RS that is communicated from the eNodeB to the UE. In the DCI, the eNodeB can include the MIMO scheme indicator to explicitly indicate a MIMO scheme for CSI measurements at the UE. In other words, the MIMO scheme indicator can notify the UE of a specific MIMO scheme to apply when reporting the CSI to the eNodeB.

In one example, the MIMO scheme indicator can be a 2-bit value. For example, a MIMO scheme indicator set to a first value (e.g., 0) can denote a MIMO scheme for CSI measurement being closed-loop spatial multiplexing, a MIMO scheme indicator set to a second value (e.g., 1) can denote a MIMO scheme for CSI measurement being transmit diversity / large delay CDD, a MIMO scheme indicator set to a third value (e.g., 2) can denote a MIMO scheme for CSI measurement being analog beam cycling, and a MIMO scheme indicator set to a fourth value (e.g., 3) can be reserved.

In an alternative example, a MIMO scheme offset can be used rather than the MIMO scheme indicator. The MIMO scheme offset can be included in the DCI. As an example, the MIMO scheme offset can be a 1-bit value, where a first value can denote that the MIMO scheme between the CSI-RS and an xPDSCH are the same, and a second value can denote that the MIMO scheme for the CSI-RS is different than the MIMO scheme for the xPDSCH.

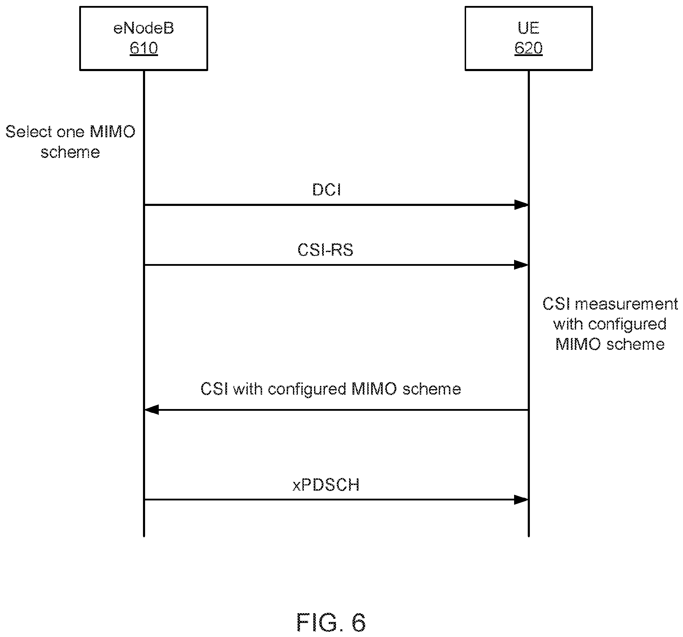

FIG. 6 illustrates exemplary signaling between an eNodeB 610 and a user equipment (UE) 620 in which the eNodeB 610 configures a massive multiple-input multiple-output (MIMO) scheme for the UE 620. The eNodeB 610 and the UE 620 can operate in a multiple-beam massive MIMO system implemented in a 5G wireless communication system. In one example, the eNodeB 610 can select the MIMO scheme for the UE 620. The selected MIMO scheme can be one of: a closed-loop MIMO scheme that utilizes closed-loop spatial multiplexing, an open-loop MIMO scheme that utilizes transmit diversity or large delay cyclic delay diversity (CDD), or an open-loop MIMO scheme that utilizes analog beam cycling. As a non-limiting example, the eNodeB 610 can select an analog beam cycling scheme as the selected MIMO scheme for the UE 620 when a Doppler frequency offset is increased based on an estimated UE moving speed, wherein the estimated UE moving speed is determined based on an uplink reference signal. As another example, the eNodeB can select a transmit diversity or large delay cyclic delay diversity (CDD) scheme as the selected MIMO scheme for the UE 620 when a beam reference signal receiving power (BRS-RP) is reduced, thereby indicating that the UE 620 is possibly located at a cell edge.

In one example, the eNodeB 610 can transmit a channel state information reference signal (CSI-RS) to the UE 620. The eNodeB 610 may have previously transmitted downlink control information (DCI) to the UE 620, and the DCI may have triggered the transmission of the CSI-RS from the eNodeB 610 to the UE 620. The DCI can include a MIMO scheme indicator that indicates the selected MIMO scheme for the UE 620. For example, the MIMO scheme indicator can include: a first value to denote that the selected MIMO scheme for CSI measurement at the UE 620 is a closed-loop MIMO scheme that utilizes closed-loop spatial multiplexing, a second value to denote that the selected MIMO scheme for CSI measurement at the UE 620 is an open-loop MIMO scheme that utilizes transmit diversity or large delay cyclic delay diversity (CDD), or a third value to denote that the selected MIMO scheme for CSI measurement at the UE 620 is an open-loop MIMO scheme that utilizes analog beam cycling.

In one example, the UE 620 can receive the DCI with the MIMO scheme indicator from the eNodeB 610, and the UE 620 can subsequently receive the CSI-RS from the eNodeB 610. The UE 620 can perform a CSI measurement in view of the CSI-RS and the selected MIMO scheme, as indicated in the MIMO scheme indicator included in the DCI. In other words, the UE 620 can perform the CSI measurement based on the MIMO scheme configured by the eNodeB 610, and the UE 620 can send the CSI measurement to the eNodeB 610.

In one example, the eNodeB 610 can receive the CSI measurement from the UE 620, and the eNodeB 610 can prepare an extended physical downlink shared channel (xPDSCH) for transmission to the UE 620 in a selected subframe in accordance with the selected MIMO scheme (i.e., the MIMO scheme configured by the eNodeB 610). In other words, the eNodeB 610 can use the same MIMO scheme to transit the next xPDSCH to the UE 620. The UE 620 can receive the xPDSCH transmission from the eNodeB 610 in the selected subframe, and the xPDSCH transmission can be in accordance with the selected MIMO scheme. Therefore, in this configuration, the eNodeB 610 selects the MIMO scheme to be implemented at the UE 620 rather than the UE 620 selecting the MIMO scheme itself.

In one example, the MIMO scheme indicator can be added in DCI which is used to trigger the CSI report. Thus, when receiving the CSI-RS, the UE 620 can buffer the CSI for all MIMO schemes, and then the UE 620 can select a CSI for a particular MIMO scheme (as indicated by the MIMO scheme indicator) for reporting to the eNodeB 610.

In one configuration, a UE can report CSI to an eNodeB for all MIMO schemes supported by the UE and the eNodeB. For example, if a CSI report is triggered by an uplink grant, the UE can report the CSI via an xPUSCH, which can allow for a higher payload of the CSI report. The CSI report can be for all MIMO schemes that are supported by the UE and the eNodeB. In this configuration, the reported CSI can include the following information: CSI for one network beam or dual network beams with the spatial multiplexing scheme, CSI for one network beam or dual network beams with the transmit diversity or large delay CDD scheme, CRIs for the beam cycling scheme and RI/CQI for the beam cycling scheme. In one example, the UE can report the CSI to the eNodeB for all MIMO schemes supported by the UE and the eNodeB, and then the eNodeB can select a particular MIMO scheme to be implemented at the UE.

In one example, in a single beam operation based system, for the closed-loop scheme or the transmit diversity / large delay CDD scheme, the UE can only report its CSI for one network beam instead of two network beams. In addition, if joint precoding among *T, e.g., T>1* antenna panels is enabled, the CSI for the spatial multiplexing scheme can conclude the RI/PMI/CQI esti-

mated from $a\, T \times N_p$ antenna ports codebook, where $N_p$ denotes a number of RF chains in one antenna panel.

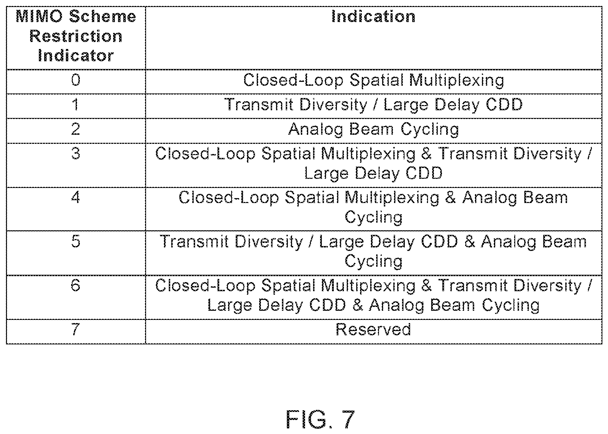

FIG. 7 is an exemplary table that includes a plurality of possible values for a multiple-input multiple-output (MIMO) scheme restriction indicator. The MIMO scheme restriction indicator can be explicitly configured by the eNodeB in higher layer signaling from the eNodeB to the UE. Alternatively, the MIMO scheme restriction indicator can be included in DCI that is transmitted from the eNodeB to the UE, and the DCI can be used to trigger a CSI-RS from the eNodeB to the UE or a CSI report from the UE to the eNodeB. In this alternative example, in the DCI, the eNodeB can include the MIMO scheme restriction indicator to explicitly indicate which MIMO scheme(s) are to be used for CSI measurements at the UE. In other words, the MIMO scheme restriction indicator can notify the UE of specific MIMO scheme(s) to apply when reporting the CSI to the eNodeB. In this example, the eNodeB can receive CSI measurements with certain MIMO scheme(s), and the eNodeB can select a particular MIMO scheme for the UE accordingly.

In one example, the MIMO scheme restriction indicator can be a 3-bit value. For example, a MIMO scheme restriction indicator set to a first value (e.g., 0) can denote that the MIMO scheme to be utilized at the UE is closed-loop spatial multiplexing, a MIMO scheme restriction indicator set to a second value (e.g., 1) can denote that the MIMO scheme to be utilized at the UE is transmit diversity / large delay CDD, a MIMO scheme restriction indicator set to a third value (e.g., 2) can denote that the MIMO scheme to be utilized at the UE is analog beam forming, a MIMO scheme restriction indicator set to a fourth value (e.g., 3) can denote that the MIMO schemes to be utilized at the UE are closed-loop spatial multiplexing and transmit diversity / large delay CDD, a MIMO scheme restriction indicator set to a fifth value (e.g., 4) can denote that the MIMO schemes to be utilized at the UE are closed-loop spatial multiplexing and analog beam cycling, a MIMO scheme restriction indicator set to a sixth value (e.g., 5) can denote that the MIMO schemes to be utilized at the UE are transmit diversity / large delay CDD and analog beam cycling, a MIMO scheme restriction indicator set to a seventh value (e.g., 6) can denote that the MIMO schemes to be utilized at the UE are closed-loop spatial multiplexing, transmit diversity / large delay CDD and analog beam cycling, and a MIMO scheme restriction indicator set to an eight value (e.g., 7) can be reserved.

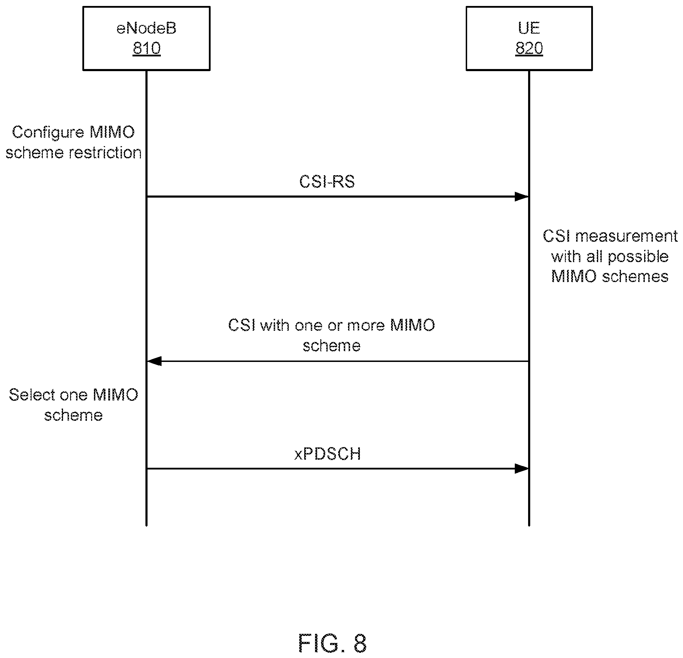

FIG. 8 illustrates exemplary signaling between an eNodeB 810 and a user equipment (UE) 820 in which the eNodeB 810 can select a massive multiple-input multiple-output (MIMO) scheme for the UE 820. The eNodeB 810 and the UE 820 can operate in a multiple-beam massive MIMO system implemented in a 5G wireless communication system. In one example, the eNodeB 810 can identify one or more candidate MIMO schemes for the UE 820. The eNodeB 810 can transmit a channel state information reference signal (CSI-RS) to the UE 820. The eNodeB 810 may have previously transmitted downlink control information (DCI) to the UE 820, and the DCI may have triggered the transmission of the CSI-RS from the eNodeB 810 to the UE 820.

In one example, the DCI can include a MIMO scheme restriction indicator that indicates the one or more candidate MIMO schemes selected for the UE. The one or more candidate MIMO schemes indicated in the DCI (via the MIMO scheme restriction indicator) can correspond to all MIMO schemes that are supported at both the eNodeB 810 and the UE 820, or alternatively, the one or more candidate MIMO schemes indicated in the DCI (via the MIMO scheme restriction indicator) can correspond to a subset of all MIMO schemes that are supported at both the eNodeB 810 and the UE 820. In one example, the MIMO scheme restriction indicator can be a selected value to denote that the one or more candidate MIMO schemes selected for the UE 820 includes one or more of: a closed-loop MIMO scheme that utilizes closed-loop spatial multiplexing, an open-loop MIMO scheme that utilizes transmit diversity or large delay cyclic delay diversity (CDD), or an open-loop MIMO scheme that utilizes analog beam cycling. Thus, the MIMO scheme restriction indicator in the DCI can enable the UE 820 to perform a separate channel state information (CSI) measurement using each of the one or more candidate MIMO schemes selected by the eNodeB 810 for the UE 820.

In one example, the UE 820 can receive the DCI with the MIMO scheme restriction indicator from the eNodeB 810, and the UE 820 can subsequently receive the CSI-RS from the eNodeB 810. The UE 820 can perform a CSI measurement in view of the CSI-RS and the one or more candidate MIMO schemes, as indicated in the MIMO scheme restriction indicator included in the DCI. In other words, the UE 820 can perform a separate CSI measurement for each candidate MIMO scheme indicated in the MIMO scheme restriction indicator, and the UE 820 can send a separate CSI measurement for each of the candidate MIMO schemes to the eNodeB 810. Thus, the UE 820 can send multiple CSI measurements corresponding to multiple candidate MIMO schemes to the eNodeB 810.

In one example, the eNodeB 810 can receive the CSI measurement(s) from the UE 820, and the CSI measurement(s) can be derived using the one or more candidate MIMO schemes selected for the UE 820 (as indicated in the MIMO scheme restriction indicator). The eNodeB 810 can select a single MIMO scheme for the UE 820 based on the CSI measurement(s) received from the UE 820. In other words, the eNodeB 810 can evaluate each CSI measurement received from the UE 820, and select the single MIMO scheme that corresponds to the CSI measurement that is best received from the UE 820.

In one example, the eNodeB 810 can prepare an extended physical downlink shared channel (xPDSCH) for transmission to the UE 820 in a selected subframe in accordance with the selected MIMO scheme. In other words, the eNodeB 810 can use the single MIMO scheme selected for the UE 820 to transit the next xPDSCH to the UE 820. The UE 820 can receive the xPDSCH transmission from the eNodeB 810 in the selected subframe, and the xPDSCH transmission can be in accordance with the selected MIMO scheme. Therefore, in this configuration, the eNodeB 810 selects the MIMO scheme to be implemented at the UE 820 rather than the UE 820 selecting the MIMO scheme itself.

In one configuration, a user equipment (UE) can process control signaling received from an eNodeB. The control signaling can be related to a MIMO scheme for CSI measurement. The UE can report the CSI according to different MIMO schemes, which can include closed-loop MIMO, transmit diversity / large delay cyclic delay diversity (CDD) or analog beam cycling.

In one example, the UE can select the MIMO scheme when reporting the CSI. In another example, different CSI formats can be applied to different MIMO schemes, and different CSI formats can have a same bit width and be distinguished by a CSI format flag. The CSI format used for closed-loop MIMO, transmit diversity / large delay CDD can include: the CSI format flag, CSI including rank indicator (RI), precoder matrix indicator (PMI) and channel quality indicator (CQI) for one beam or dual beams, and padding. In yet another example, the CSI format used for a beam cycling mode can include the CSI format flag, RI, CQI and a CSI reference signal resource index (CRI) for the cyclic beams.

In one example, the MIMO scheme for CSI feedback can be indicated by the eNodeB. In another example, a MIMO scheme indicator or MIMO scheme offset indicator can be configured by DCI.

In one example, a MIMO scheme restriction for CSI feedback can be indicated by the eNodeB in the DCI. The UE can select the MIMO scheme based on the MIMO scheme restriction when reporting the CSI.

Another example provides functionality 900 of a user equipment (UE) operable to perform interference measurements in a massive multiple-input multiple-output (MIMO) system. The UE can comprise one or more processors configured to decode, at the UE, downlink control information (DCI) received from a base station, wherein the DCI is associated with an extended physical downlink shared channel (xPDSCH) in a selected subframe, as in block 910. The UE can comprise one or more processors configured to perform, in response to the DCI received from the base station, an interference measurement based on the xPDSCH in the selected subframe, as in block 920. The UE can comprise one or more processors configured to determine, at the UE, an interference level indicator (ILI) for the selected subframe based on the interference measurement, as in block 930. The UE can comprise one or more processors configured to encode, at the UE, the ILI for transmission to the base station, as in block 940. In addition, the UE can comprise a memory interface configured to send to a memory the ILI for the selected subframe.

Another example provides functionality 1000 of a user equipment (UE) operable to select a multiple-input multiple-output (MIMO) scheme for a massive MIMO system. The UE can comprise one or more processors configured to decode, at the UE, a channel state information reference signal (CSI-RS) received from a base station, as in block 1010. The UE can comprise one or more processors configured to perform, at the UE, one or more channel state information (CSI) measurements, as in block 1020. The UE can comprise one or more processors configured to identify, at the UE, a recommended MIMO scheme based on the one or more CSI measurements, as in block 1030. The UE can comprise one or more processors configured to encode, at the UE, a CSI measurement for transmission to the base station with the recommended MIMO scheme, as in block 1040. The UE can comprise one or more processors configured to decode, at the UE, an extended physical downlink shared channel (xPDSCH) received from the base station in a selected subframe, wherein the xPDSCH is prepared at the base station in accordance with the recommended MIMO scheme received from the UE, as in block 1050. In addition, the UE can comprise a memory interface configured to send to a memory an indication of the recommended MIMO scheme.

Another example provides functionality 1100 of a base station operable to configure a multiple-input multiple-output (MIMO) scheme for a user equipment (UE) in a massive MIMO system. The base station can comprise one or more processors configured to select, at the base station, the MIMO scheme for the UE, as in block 1110. The base station can comprise one or more processors configured to encode, at the base station, a channel state information reference signal (CSI-RS) for transmission to the UE, as in block 1120. The base station can comprise one or more processors configured to encode, at the base station, downlink control information (DCI) for transmission to the UE that triggers the CSI-RS, wherein the DCI includes a MIMO scheme indicator that indicates the selected MIMO scheme for the UE, wherein the DCI enables the UE to perform a channel state information (CSI) measurement using the selected MIMO scheme, as in block 1130. The base station can comprise one or more processors configured to decode, at the base station, the CSI measurement received from the UE, as in block 1140. The base station can comprise one or more processors configured to encode, at the base station, an extended physical downlink shared channel (xPDSCH) for transmission to the UE in a selected subframe, wherein the xPDSCH is prepared for transmission at the base station using the selected MIMO scheme for the UE, as in block 1150. In addition, the base station can comprise a memory interface configured to send to a memory an indication of the selected MIMO scheme.

Another example provides functionality 1200 of a base station operable to configure one or more multiple-input multiple-output (MIMO) schemes for a user equipment (UE) in a massive MIMO system. The base station can comprise one or more processors configured to identify, at the base station, one or more candidate MIMO schemes for the UE, as in block 1210. The base station can comprise one or more processors configured to encode, at the base station, a channel state information reference signal (CSI-RS) for transmission to the UE, as in block 1220. The base station can comprise one or more processors configured to encode, at the base station, downlink control information (DCI) for transmission to the UE that triggers the CSI-RS, wherein the DCI includes a MIMO scheme restriction indicator that indicates the one or more candidate MIMO schemes selected for the UE, wherein the DCI enables the UE to perform a separate channel state information (CSI) measurement using each of the one or more candidate MIMO schemes selected for the UE, as in block 1230. The base station can comprise one or more processors configured to decode, at the base station, one or more CSI measurements received from the UE that are derived using the one or more candidate MIMO schemes selected for the UE, as in block 1240. The base station can comprise one or more processors configured to select, at the base station, a single MIMO scheme for the UE based on the one or more CSI measurements received from the UE, as in block 1250. The base station can comprise one or more processors configured to encode, at the base station, an extended physical downlink shared channel (xPDSCH) for transmission to the UE in a selected subframe, wherein the xPDSCH is prepared for transmission at the base station using the single MIMO scheme selected for the UE, as in block 1260. In addition, the base station can comprise a memory interface configured to send to a memory an indication of the single MIMO scheme selected for the UE.

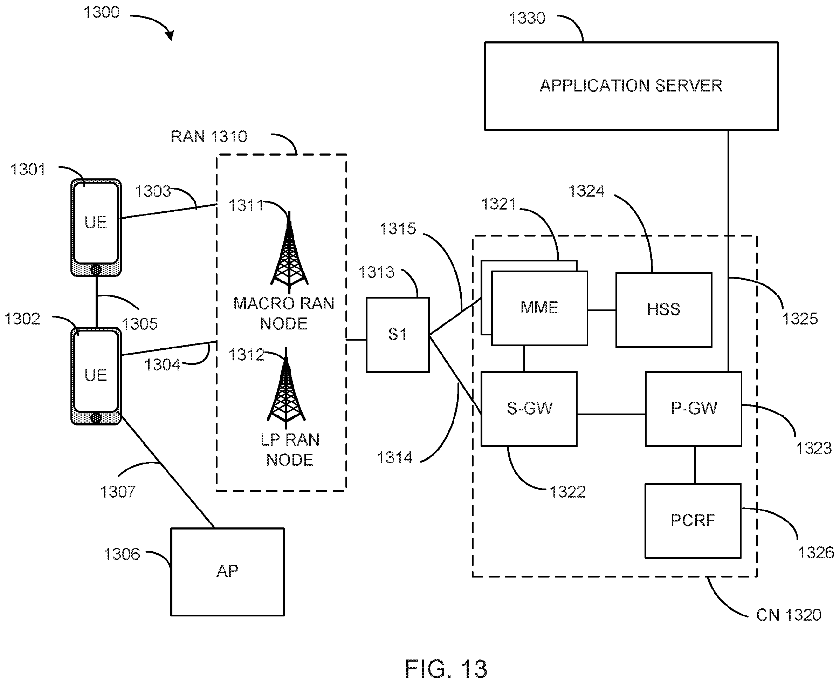

FIG. 13 illustrates an architecture of a system 1300 of a network in accordance with some embodiments. The system 1300 is shown to include a user equipment (UE) 1301 and a UE 1302. The UEs 1301 and 1302 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 1301 and 1302 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 1301 and 1302 may be configured to connect, e.g., communicatively couple, with a radio access network (RAN) 1310 - the RAN 1310 may be, for example, an Evolved Universal Mobile Telecommunications System (UMTS) Terrestrial Radio Access Network (E-UTRAN), a NextGen RAN (NG RAN), or some other type of RAN. The UEs 1301 and 1302 utilize connections 1303 and 1304, respectively, each of which comprises a physical communications interface or layer (discussed in further detail below); in this example, the connections 1303 and 1304 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 1301 and 1302 may further directly exchange communication data via a ProSe interface 1305. The ProSe interface 1305 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1302 is shown to be configured to access an access point (AP) 1306 via connection 1307. The connection 1307 can comprise a local wireless connection, such as a connection consistent with any IEEE 802.15 protocol, wherein the AP 1306 would comprise a wireless fidelity (WiFi®) router. In this example, the AP 1306 is shown to be connected to the Internet without connecting to the core network of the wireless system (described in further detail below).

The RAN 1310 can include one or more access nodes that enable the connections 1303 and 1304. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 1310 may include one or more RAN nodes for providing macrocells, e.g., macro RAN node 1311, and one or more RAN nodes for providing femtocells or picocells (e.g., cells having smaller coverage areas, smaller user capacity, or higher bandwidth compared to macrocells), e.g., low power (LP) RAN node 1312.

Any of the RAN nodes 1311 and 1312 can terminate the air interface protocol and can be the first point of contact for the UEs 1301 and 1302. In some embodiments, any of the RAN nodes 1311 and 1312 can fulfill various logical functions for the RAN 1310 including, but not limited to, radio network controller (RNC) functions such as radio bearer management, uplink and downlink dynamic radio resource management and data packet scheduling, and mobility management.

In accordance with some embodiments, the UEs 1301 and 1302 can be configured to communicate using Orthogonal Frequency-Division Multiplexing (OFDM) communication signals with each other or with any of the RAN nodes 1311 and 1312 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1311 and 1312 to the UEs 1301 and 1302, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 1301 and 1302. The physical downlink control channel (PDCCH) may carry information about the transport format and resource allocations related to the PDSCH channel, among other things. It may also inform the UEs 1301 and 1302 about the transport format, resource allocation, and H-ARQ (Hybrid Automatic Repeat Request) information related to the uplink shared channel. Typically, downlink scheduling (assigning control and shared channel resource blocks to the UE 1302 within a cell) may be performed at any of the RAN nodes 1311 and 1312 based on channel quality information fed back from any of the UEs 1301 and 1302. The downlink resource assignment information may be sent on the PDCCH used for (e.g., assigned to) each of the UEs 1301 and 1302.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 1310 is shown to be communicatively coupled to a core network (CN) 1320 -via an S1 interface 1313. In embodiments, the CN 1320 may be an evolved packet core (EPC) network, a NextGen Packet Core (NPC) network, or some other type of CN. In this embodiment the S1 interface 1313 is split into two parts: the S1-U interface 1314, which carries traffic data between the RAN nodes 1311 and 1312 and the serving gateway (S-GW) 1322, and the S1-mobility management entity (MME) interface 1315, which is a signaling interface between the RAN nodes 1311 and 1312 and MMEs 1321.

In this embodiment, the CN 1320 comprises the MMEs 1321, the S-GW 1322, the Packet Data Network (PDN) Gateway (P-GW) 1323, and a home subscriber server (HSS) 1324. The MMEs 1321 may be similar in function to the control plane of legacy Serving General Packet Radio Service (GPRS) Support Nodes (SGSN). The MMEs 1321 may manage mobility aspects in access such as gateway selection and tracking area list management. The HSS 1324 may comprise a database for network users, including subscription-related information to support the network entities' handling of communication sessions. The CN 1320 may comprise one or several HSSs 1324, depending on the number of mobile subscribers, on the capacity of the equipment, on the organization of the network, etc. For example, the HSS 1324 can provide support for routing/roaming, authentication, authorization, naming/addressing resolution, location dependencies, etc.

The S-GW 1322 may terminate the S1 interface 1313 towards the RAN 1310, and routes data packets between the RAN 1310 and the CN 1320. In addition, the S-GW 1322 may be a local mobility anchor point for inter-RAN node handovers and also may provide an anchor for inter-3GPP mobility. Other responsibilities may include lawful intercept, charging, and some policy enforcement.

The P-GW 1323 may terminate an SGi interface toward a PDN. The P-GW 1323 may route data packets between the EPC network 1323 and external networks such as a network including the application server 1330 (alternatively referred to as application function (AF)) via an Internet Protocol (IP) interface 1325. Generally, the application server 1330 may be an element offering applications that use IP bearer resources with the core network (e.g., UMTS Packet Services (PS) domain, LTE PS data services, etc.). In this embodiment, the P-GW 1323 is shown to be communicatively coupled to an application server 1330 via an IP communications interface 1325. The application server 1330 can also be configured to support one or more communication services (e.g., Voice-over-Internet Protocol (VoIP) sessions, PTT sessions, group communication sessions, social networking services, etc.) for the UEs 1301 and 1302 via the CN 1320.

The P-GW 1323 may further be a node for policy enforcement and charging data collection. Policy and Charging Enforcement Function (PCRF) 1326 is the policy and charging control element of the CN 1320. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1326 may be communicatively coupled to the application server 1330 via the P-GW 1323. The application server 1330 may signal the PCRF 1326 to indicate a new service flow and select the appropriate Quality of Service (QoS) and charging parameters. The PCRF 1326 may provision this rule into a Policy and Charging Enforcement Function (PCEF) (not shown) with the appropriate traffic flow template (TFT) and QoS class of identifier (QCI), which commences the QoS and charging as specified by the application server 1330.

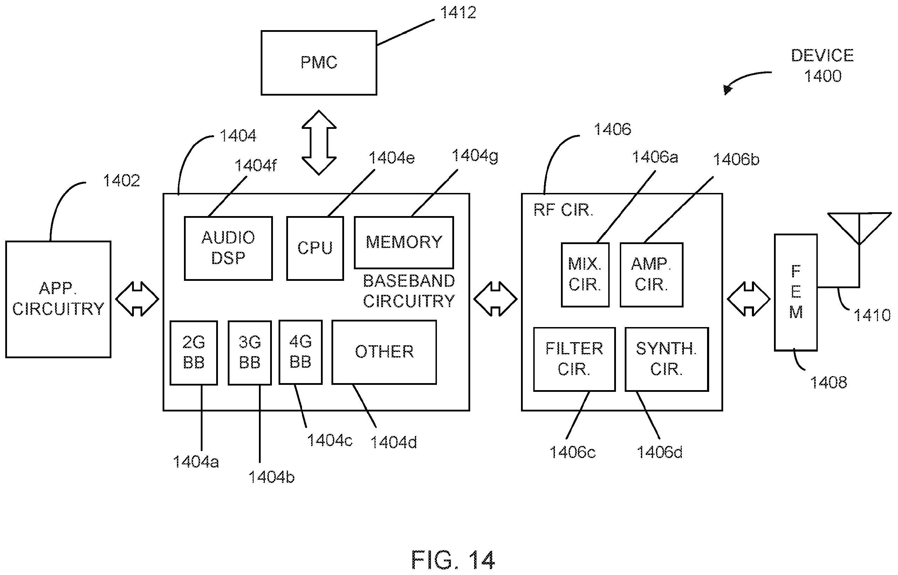

FIG. 14 illustrates example components of a device 1400 in accordance with some embodiments. In some embodiments, the device 1400 may include application circuitry 1402, baseband circuitry 1404, Radio Frequency (RF) circuitry 1406, front-end module (FEM) circuitry 1408, one or more antennas 1410, and power management circuitry (PMC) 1412 coupled together at least as shown. The components of the illustrated device 1400 may be included in a UE or a RAN node. In some embodiments, the device 1400 may include less elements (e.g., a RAN node may not utilize application circuitry 1402, and instead include a processor/controller to process IP data received from an EPC). In some embodiments, the device 1400 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 1402 may include one or more application processors. For example, the application circuitry 1402 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1400. In some embodiments, processors of application circuitry 1402 may process IP data packets received from an EPC.

The baseband circuitry 1404 may include circuitry such as, but not limited to, one or more single-core or multi-core processors. The baseband circuitry 1404 may include one or more baseband processors or control logic to process baseband signals received from a receive signal path of the RF circuitry 1406 and to generate baseband signals for a transmit signal path of the RF circuitry 1406. Baseband processing circuity 1404 may interface with the application circuitry 1402 for generation and processing of the baseband signals and for controlling operations of the RF circuitry 1406. For example, in some embodiments, the baseband circuitry 1404 may include a third generation (3G) baseband processor 1404a, a fourth generation (4G) baseband processor 1404b, a fifth generation (5G) baseband processor 1404c, or other baseband processor(s) 1404d for other existing generations, generations in development or to be developed in the future (e.g., second generation (2G), sixth generation (6G), etc.). The baseband circuitry 1404 (e.g., one or more of baseband processors 1404a-d) may handle various radio control functions that enable communication with one or more radio networks via the RF circuitry 1406. In other embodiments, some or all of the functionality of baseband processors 1404a-d may be included in modules stored in the memory 1404g and executed via a Central Processing Unit (CPU) 1404e. The radio control functions may include, but are not limited to, signal modulation/demodulation, encoding/decoding, radio frequency shifting, etc. In some embodiments, modulation/demodulation circuitry of the baseband circuitry 1404 may include Fast-Fourier Transform (FFT), precoding, or constellation mapping/demapping functionality. In some embodiments, encoding/decoding circuitry of the baseband circuitry 1404 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1404 may include one or more audio digital signal processor(s) (DSP) 1404f. The audio DSP(s) 1404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1404 and the application circuitry 1402 may be implemented together such as, for example, on a system on a chip (SOC).

In some embodiments, the baseband circuitry 1404 may provide for communication compatible with one or more radio technologies. For example, in some embodiments, the baseband circuitry 1404 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 1404 is configured to support radio communications of more than one wireless protocol may be referred to as multi-mode baseband circuitry.

RF circuitry 1406 may enable communication with wireless networks using modulated electromagnetic radiation through a non-solid medium. In various embodiments, the RF circuitry 1406 may include switches, filters, amplifiers, etc. to facilitate the communication with the wireless network. RF circuitry 1406 may include a receive signal path which may include circuitry to down-convert RF signals received from the FEM circuitry 1408 and provide baseband signals to the baseband circuitry 1404. RF circuitry 1406 may also include a transmit signal path which may include circuitry to up-convert baseband signals provided by the baseband circuitry 1404 and provide RF output signals to the FEM circuitry 1408 for transmission.

In some embodiments, the receive signal path of the RF circuitry 1406 may include mixer circuitry 1406a, amplifier circuitry 1406b and filter circuitry 1406c. In some embodiments, the transmit signal path of the RF circuitry 1406 may include filter circuitry 1406c and mixer circuitry 1406a. RF circuitry 1406 may also include synthesizer circuitry 1406d for synthesizing a frequency for use by the mixer circuitry 1406a of the receive signal path and the transmit signal path. In some embodiments, the mixer circuitry 1406a of the receive signal path may be configured to down-convert RF signals received from the FEM circuitry 1408 based on the synthesized frequency provided by synthesizer circuitry 1406d. The amplifier circuitry 1406b may be configured to amplify the down-converted signals and the filter circuitry 1406c may be a low-pass filter (LPF) or band-pass filter (BPF) configured to remove unwanted signals from the down-converted signals to generate output baseband signals. Output baseband signals may be provided to the baseband circuitry 1404 for further processing. In some embodiments, the output baseband signals may be zero-frequency baseband signals, although this is not a requirement. In some embodiments, mixer circuitry 1406a of the receive signal path may comprise passive mixers, although the scope of the embodiments is not limited in this respect.

In some embodiments, the mixer circuitry 1406a of the transmit signal path may be configured to up-convert input baseband signals based on the synthesized frequency provided by the synthesizer circuitry 1406d to generate RF output signals for the FEM circuitry 1408. The baseband signals may be provided by the baseband circuitry 1404 and may be filtered by filter circuitry 1406c.

In some embodiments, the mixer circuitry 1406a of the receive signal path and the mixer circuitry 1406a of the transmit signal path may include two or more mixers and may be arranged for quadrature downconversion and upconversion, respectively. In some embodiments, the mixer circuitry 1406a of the receive signal path and the mixer circuitry 1406a of the transmit signal path may include two or more mixers and may be arranged for image rejection (e.g., Hartley image rejection). In some embodiments, the mixer circuitry 1406a of the receive signal path and the mixer circuitry 1406a may be arranged for direct downconversion and direct upconversion, respectively. In some embodiments, the mixer circuitry 1406a of the receive signal path and the mixer circuitry 1406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1406 may include analog-to-digital converter (ADC) and digital-to-analog converter (DAC) circuitry and the baseband circuitry 1404 may include a digital baseband interface to communicate with the RF circuitry 1406.

In some dual-mode embodiments, a separate radio IC circuitry may be provided for processing signals for each spectrum, although the scope of the embodiments is not limited in this respect.

In some embodiments, the synthesizer circuitry 1406d may be a fractional-N synthesizer or a fractional N/N+1 synthesizer, although the scope of the embodiments is not limited in this respect as other types of frequency synthesizers may be suitable. For example, synthesizer circuitry 1406d may be a delta-sigma synthesizer, a frequency multiplier, or a synthesizer comprising a phase-locked loop with a frequency divider.

The synthesizer circuitry 1406d may be configured to synthesize an output frequency for use by the mixer circuitry 1406a of the RF circuitry 1406 based on a frequency input and a divider control input. In some embodiments, the synthesizer circuitry 1406d may be a fractional N/N+1 synthesizer.

In some embodiments, frequency input may be provided by a voltage controlled oscillator (VCO), although that is not a requirement. Divider control input may be provided by either the baseband circuitry 1404 or the applications processor 1402 depending on the desired output frequency. In some embodiments, a divider control input (e.g., N) may be determined from a look-up table based on a channel indicated by the applications processor 1402.

Synthesizer circuitry 1406d of the RF circuitry 1406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1406 may include an IQ/polar converter.

FEM circuitry 1408 may include a receive signal path which may include circuitry configured to operate on RF signals received from one or more antennas 1410, amplify the received signals and provide the amplified versions of the received signals to the RF circuitry 1406 for further processing. FEM circuitry 1408 may also include a transmit signal path which may include circuitry configured to amplify signals for transmission provided by the RF circuitry 1406 for transmission by one or more of the one or more antennas 1410. In various embodiments, the amplification through the transmit or receive signal paths may be done solely in the RF circuitry 1406, solely in the FEM 1408, or in both the RF circuitry 1406 and the FEM 1408.

In some embodiments, the FEM circuitry 1408 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 1406). The transmit signal path of the FEM circuitry 1408 may include a power amplifier (PA) to amplify input RF signals (e.g., provided by RF circuitry 1406), and one or more filters to generate RF signals for subsequent transmission (e.g., by one or more of the one or more antennas 1410).

In some embodiments, the PMC 1412 may manage power provided to the baseband circuitry 1404. In particular, the PMC 1412 may control power-source selection, voltage scaling, battery charging, or DC-to-DC conversion. The PMC 1412 may often be included when the device 1400 is capable of being powered by a battery, for example, when the device is included in a UE. The PMC 1412 may increase the power conversion efficiency while providing desirable implementation size and heat dissipation characteristics.

While FIG. 14 shows the PMC 1412 coupled only with the baseband circuitry 1404. However, in other embodiments, the PMC 14 12 may be additionally or alternatively coupled with, and perform similar power management operations for, other components such as, but not limited to, application circuitry 1402, RF circuitry 1406, or FEM 1408.

In some embodiments, the PMC 1412 may control, or otherwise be part of, various power saving mechanisms of the device 1400. For example, if the device 1400 is in an RRC_Connected state, where it is still connected to the RAN node as it expects to receive traffic shortly, then it may enter a state known as Discontinuous Reception Mode (DRX) after a period of inactivity. During this state, the device 1400 may power down for brief intervals of time and thus save power.

If there is no data traffic activity for an extended period of time, then the device 1400 may transition off to an RRC_Idle state, where it disconnects from the network and does not perform operations such as channel quality feedback, handover, etc. The device 1400 goes into a very low power state and it performs paging where again it periodically wakes up to listen to the network and then powers down again. The device 1400 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1402 and processors of the baseband circuitry 1404 may be used to execute elements of one or more instances of a protocol stack. For example, processors of the baseband circuitry 1404, alone or in combination, may be used execute Layer 3, Layer 2, or Layer 1 functionality, while processors of the application circuitry 1404 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

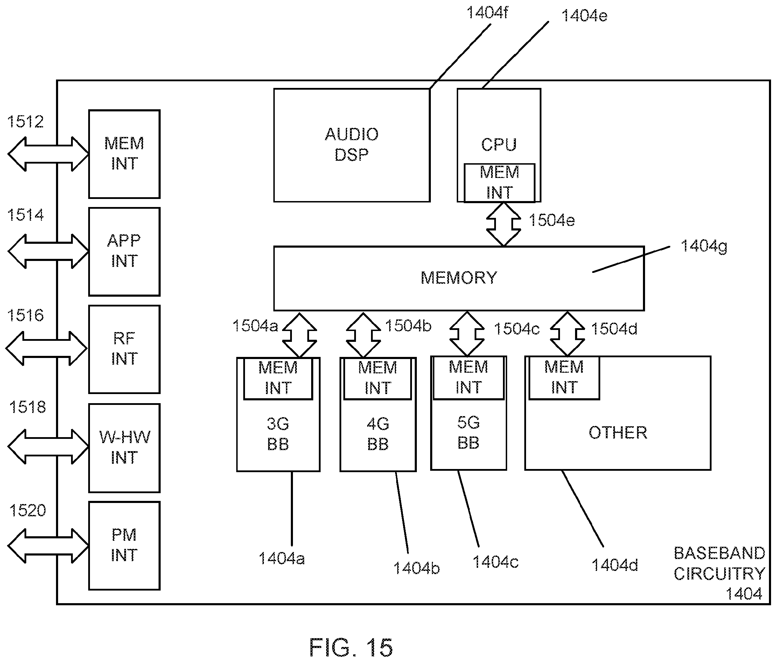

FIG. 15 illustrates example interfaces of baseband circuitry in accordance with some embodiments. As discussed above, the baseband circuitry 1404 of FIG. 14 may comprise processors 1404a-1404e and a memory 1404g utilized by said processors. Each of the processors 1404a-1404e may include a memory interface, 1504a-1504e, respectively, to send/receive data to/from the memory 1404g.

The baseband circuitry 1404 may further include one or more interfaces to communicatively couple to other circuitries/devices, such as a memory interface 1512 (e.g., an interface to send/receive data to/from memory external to the baseband circuitry 1404), an application circuitry interface 1514 (e.g., an interface to send/receive data to/from the application circuitry 1402 of FIG. 14), an RF circuitry interface 1516 (e.g., an interface to send/receive data to/from RF circuitry 1406 of FIG. 14), a wireless hardware connectivity interface 1518 (e.g., an interface to send/receive data to/from Near Field Communication (NFC) components, Bluetooth® components (e.g., Bluetooth® Low Energy), Wi-Fi® components, and other communication components), and a power management interface 1520 (e.g., an interface to send/receive power or control signals to/from the PMC 1412.

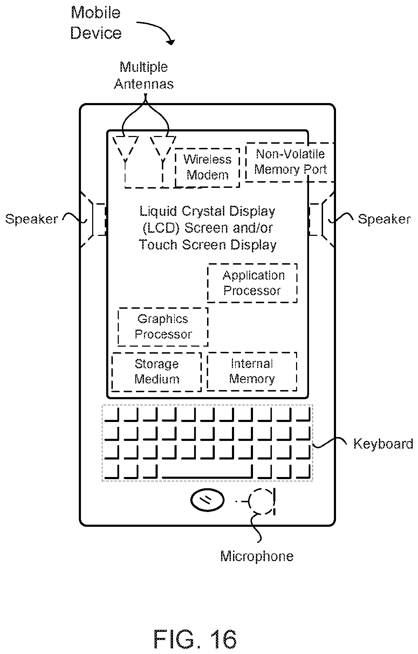

FIG. 16 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 16 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

## Examples

The following examples pertain to specific technology embodiments and point out specific features, elements, or actions that can be used or otherwise combined in achieving such embodiments.

Example 1 includes an apparatus of a user equipment (UE) operable to perform interference measurements in a massive multiple-input multiple-output (MIMO) system, the UE comprising: one or more processors configured to: decode, at the UE, downlink control information (DCI) received from a base station, wherein the DCI is associated with an extended physical downlink shared channel (xPDSCH) in a selected subframe; perform, in response to the DCI received from the base station, an interference measurement based on the xPDSCH in the selected subframe; determine, at the UE, an interference level indicator (ILI) for the selected subframe based on the interference measurement; and encode, at the UE, the ILI for transmission to the base station; and a memory interface configured to send to a memory the ILI for the selected subframe.

Example 2 includes the apparatus of Example 1, further comprising a transceiver configured to: receive the DCI from the base station; and transmit the report that includes the ILI to the base station.

Example 3 includes the apparatus of any of Examples 1 to 2, wherein the DCI includes an interference measurement flag that indicates when the UE is to perform the interference measurement based on a reference signal in the xPDSCH in the selected subframe, wherein the interference measurement flag is set to: a first value to denote that the UE is to perform the interference measurement based on the reference signal in the xPDSCH in the selected subframe, or a second value to denote that the UE is to not perform the interference measurement based on the reference signal in the xPDSCH in the selected subframe.

Example 4 includes the apparatus of any of Examples 1 to 3, wherein the DCI includes an interference averaging flag that indicates when the UE is to perform a running average of one or more interference measurements, wherein the interference averaging flag is set to: a first value to denote that interference measurement averaging is stopped, or a second value to denote that interference measurement averaging is continued.

Example 5 includes the apparatus of any of Examples 1 to 4, wherein the DCI includes an interference measurement flag that enables the UE to perform the interference measurement based on a reference signal in the xPDSCH in the selected subframe, wherein the interference averaging flag is set to: a first value to denote that the interference measurement is disabled and that interference measurement averaging is stopped, a second value to denote that the interference measurement is disabled and that interference measurement averaging is continued, a third value to denote that the interference measurement is enabled and that interference measurement averaging is stopped, or a fourth value to denote that the interference measurement is enabled and that interference measurement averaging is continued.

Example 6 includes the apparatus of any of Examples 1 to 5, wherein the one or more processors are further configured to perform the interference measurement ($r_k$) in accordance with $r_k = Y_k - \tilde{H}_k X_k$ for subcarrier k, wherein $Y_k$ is a $N_{rx} \times 1$ receiving signal, $\tilde{H}_k$ is a $N_{rx} \times N_{tx}$ estimated effective channel, $X_k$ is a $N_{tx} \times 1$ reference signal, $N_{rx}$ is a number of receiving antenna ports, and $N_{tx}$ is a number of transmitting antenna ports.

Example 7 includes the apparatus of any of Examples 1 to 6, wherein the one or more processors are further configured to quantize the interference measurement into N bits to obtain the ILI, wherein the ILI is calculated based on an averaging of one or more subcarriers k and one or more receiving antennas, and N is a positive integer.

Example 8 includes the apparatus of any of Examples 1 to 7, wherein the one or more processors are further configured to encode the ILI for transmission to the base station via an extended physical uplink shared channel (xPUSCH) or an extended physical uplink control channel (xPUCCH).

Example 9 includes the apparatus of any of Examples 1 to 8, wherein the one or more processors are further configured to: encode the ILI for transmission to the base station when an interference measurement averaging at the UE is stopped; or encode the ILI for transmission to the base station based on an interference report flag included in the DCI; or encode the ILI for transmission to the base station along with a hybrid automatic repeat request (HARQ) acknowledgement (ACK) or negative ACK (NACK) transmission.

Example 10 includes the apparatus of any of Examples 1 to 9, wherein the one or more processors are further configured to encode the ILI for transmission to the base station to enable a reduction in channel state information reference signal (CSI-RS) overhead.

Example 11 includes the apparatus of any of Examples 1 to 10, wherein the one or more processors are further configured to execute multiple interference measurement processes to support one or more of: multi-user (MU) MIMO or single-user (SU) MIMO.

Example 12 includes the apparatus of any of Examples 1 to 11, wherein the DCI includes an interference measurement process identifier (ID) for a selected interference measurement process at the UE, and the UE is configured to report the ILI for the selected interference measurement process based on the interference measurement process ID included in the DCI.

Example 13 includes the apparatus of any of Examples 1 to 12, wherein the UE operates in a multiple-beam massive MIMO system implemented in a Fifth Generation (5G) wireless communication system.

Example 14 includes an apparatus of a user equipment (UE) operable to select a multiple-input multiple-output (MIMO) scheme for a massive MIMO system, the UE comprising: one or more processors configured to: decode, at the UE, a channel state information reference signal (CSI-RS) received from a base station; perform, at the UE, one or more channel state information (CSI) measurements; identify, at the UE, a recommended MIMO scheme based on the one or more CSI measurements; encode, at the UE, a CSI measurement for transmission to the base station with the recommended MIMO scheme; and decode, at the UE, an extended physical downlink shared channel (xPDSCH) received from the base station in a selected subframe, wherein the xPDSCH is prepared at the base station in accordance with the recommended MIMO scheme received from the UE; and a memory interface configured to send to a memory an indication of the recommended MIMO scheme.

Example 15 includes the apparatus of Example 14, further comprising a transceiver configured to: receive the CSI-RS from the base station; transmit the CSI to the base station with the recommended MIMO scheme; and receive the xPDSCH from the base station in the selected subframe.

Example 16 includes the apparatus of any of Examples 14 to 15, wherein the one or more processors are further configured to: perform, at the UE, the one or more channel state information (CSI) measurements using different MIMO schemes; and identify, at the UE, the recommended MIMO scheme based on the one or more CSI measurements using the different MIMO schemes.

Example 17 includes the apparatus of any of Examples 14 to 16, wherein the one or more processors are further configured to: identify an open-loop MIMO scheme as the recommended MIMO scheme when a frequency offset is increased due to an increased moving speed; or identify a closed-loop MIMO scheme as the recommended MIMO scheme when the frequency offset is decreased and a signal-to-noise ratio (SINR) is increased.

Example 18 includes the apparatus of any of Examples 14 to 17, wherein the recommended MIMO scheme is one of: a closed-loop MIMO scheme that utilizes closed-loop spatial multiplexing, an open-loop MIMO scheme that utilizes transmit diversity or large delay cyclic delay diversity (CDD), or an open-loop MIMO scheme that utilizes analog beam cycling.

Example 19 includes the apparatus of any of Examples 14 to 18, wherein the CSI measurement is associated with a format 1 when the CSI is measured from a particular network beam, or the CSI measurement is associated with a format 2 when the CSI is measured from cycling network beams, wherein format 1 includes one or more of: a CSI format flag, CSI for one network beam or a dual network beam or zero padding, wherein format 2 includes one or more of: a CSI format flag, CSI-RS resource indexes (CRIs) for selected cycling network beams, rank indicator (RI) or channel quality indicator (CQI) for the selected cycling network beams or zero padding.

Example 20 includes the apparatus of any of Examples 14 to 19, wherein the UE operates in a multiple-beam massive MIMO system implemented in a Fifth Generation (5G) wireless communication system.

Example 21 includes an apparatus of a base station operable to configure a multiple-input multiple-output (MIMO) scheme for a user equipment (UE) in a massive MIMO system, the base station comprising: one or more processors configured to: select, at the base station, the MIMO scheme for the UE; encode, at the base station, a channel state information reference signal (CSI-RS) for transmission to the UE; encode, at the base station, downlink control information (DCI) for transmission to the UE that triggers the CSI-RS, wherein the DCI includes a MIMO scheme indicator that indicates the selected MIMO scheme for the UE, wherein the DCI enables the UE to perform a channel state information (CSI) measurement using the selected MIMO scheme; decode, at the base station, the CSI measurement received from the UE; and encode, at the base station, an extended physical downlink shared channel (xPDSCH) for transmission to the UE in a selected subframe, wherein the xPDSCH is prepared for transmission at the base station using the selected MIMO scheme for the UE; and a memory interface configured to send to a memory an indication of the selected MIMO scheme.

Example 22 includes the apparatus of Example 21, further comprising a transceiver configured to: transmit the CSI-RS to the UE; transmit the DCI that corresponds to the CSI-RS to the UE; receive the CSI measurement from the UE; and transmit the xPDSCH to the UE in the selected subframe.

Example 23 includes the apparatus of any of Examples 21 to 22, wherein the one or more processors are further configured to: select an analog beam cycling scheme as the selected MIMO scheme when a Doppler frequency offset is increased based on an estimated UE moving speed, wherein the estimated UE moving speed is determined based on an uplink reference signal; or select a transmit diversity or large delay cyclic delay diversity (CDD) scheme as the selected MIMO scheme when a beam reference signal receiving power (BRS-RP) is reduced, thereby indicating that the UE is possibly located at a cell edge.

Example 24 includes the apparatus of any of Examples 21 to 23, wherein the MIMO scheme indicator includes: a first value to denote that the selected MIMO scheme for the UE for CSI measurement is a closed-loop MIMO scheme that utilizes closed-loop spatial multiplexing; a second value to denote that the selected MIMO scheme for the UE for CSI measurement is an open-loop MIMO scheme that utilizes transmit diversity or large delay cyclic delay diversity (CDD); or a third value to denote that the selected MIMO scheme for the UE for CSI measurement is an open-loop MIMO scheme that utilizes analog beam cycling.

Example 25 includes the apparatus of any of Examples 21 to 24, wherein the base station operates in a multiple-beam massive MIMO system implemented in a Fifth Generation (5G) wireless communication system.

Example 26 includes an apparatus of a base station operable to configure one or more multiple-input multiple-output (MIMO) schemes for a user equipment (UE) in a massive MIMO system, the base station comprising: one or more processors configured to: identify, at the base station, one or more candidate MIMO schemes for the UE; encode, at the base station, a channel state information reference signal (CSI-RS) for transmission to the UE; encode, at the base station, downlink control information (DCI) for transmission to the UE that triggers the CSI-RS, wherein the DCI includes a MIMO scheme restriction indicator that indicates the one or more candidate MIMO schemes selected for the UE, wherein the DCI enables the UE to perform a separate channel state information (CSI) measurement using each of the one or more candidate MIMO schemes selected for the UE; decode, at the base station, one or more CSI measurements received from the UE that are derived using the one or more candidate MIMO schemes selected for the UE; select, at the base station, a single MIMO scheme for the UE based on the one or more CSI measurements received from the UE; and encode, at the base station, an extended physical downlink shared channel (xPDSCH) for transmission to the UE in a selected subframe, wherein the xPDSCH is prepared for transmission at the base station using the single MIMO scheme selected for the UE; and a memory interface configured to send to a memory an indication of the single MIMO scheme selected for the UE.

Example 27 includes the apparatus of Example 26, further comprising a transceiver configured to: transmit the CSI-RS to the UE; transmit the DCI that corresponds to the CSI-RS to the UE; receive the one or more CSI measurement from the UE; and transmit the xPDSCH to the UE in the selected subframe.

Example 28 includes the apparatus of any of Examples 26 to 27, wherein the one or more candidate MIMO schemes indicated in the DCI correspond to all MIMO schemes that are supported at the base station and the UE.

Example 29 includes the apparatus of any of Examples 26 to 28, wherein the one or more candidate MIMO schemes indicated in the DCI correspond to a subset of all MIMO schemes that are supported at the base station and the UE.

Example 30 includes the apparatus of any of Examples 26 to 29, wherein the MIMO scheme restriction indicator is a selected value to denote that the one or more candidate MIMO schemes selected for the UE includes one or more of: a closed-loop MIMO scheme that utilizes closed-loop spatial multiplexing, an open-loop MIMO scheme that utilizes transmit diversity or large delay cyclic delay diversity (CDD), or an open-loop MIMO scheme that utilizes analog beam cycling.

Example 31 includes the apparatus of any of Examples 26 to 30, wherein the base station operates in a multiple-beam massive MIMO system implemented in a Fifth Generation (5G) wireless communication system.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices.

Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

**Claims**

1. An apparatus of a user equipment, UE (120), operable to select a multiple-input multiple-output, MIMO, scheme for a massive MIMO system, the UE (120) comprising:
one or more processors configured to:

decode (1010), at the UE (120), a channel state information reference signal, CSI-RS, received from a base station (110);
perform (1020), at the UE (120), one or more channel state information, CSI, measurements on the CSI-RS signal using different MIMO schemes;
identify (1030), at the UE (120), a recommended MIMO scheme based on the one or more CSI measurements using the different MIMO schemes;
encode (1040), at the UE (120), a CSI report of the one or more CSI measurements with the recommended MIMO scheme for transmission to the base station; and
decode (1050), at the UE (120), an extended physical downlink shared channel, xPDSCH, received from the base station (110) in a selected subframe,
wherein the xPDSCH is prepared at the base station (110) in accordance with the recommended MIMO scheme received from the UE (120); and
a memory interface configured to send to a memory an indication of the recommended MIMO scheme.

2. The apparatus of claim 1,
wherein the one or more processors are further configured to:

identify an open-loop MIMO scheme as the recommended MIMO scheme when a frequency offset is increased due to an increased moving speed; or
identify a closed-loop MIMO scheme as the recommended MIMO scheme when the frequency offset is decreased and a signal-to-noise ratio, SINR, is increased.

3. The apparatus of any of claims 1 to 2, wherein:
the CSI report is associated with a format 1 if the CSI-RS signal is measured from a particular network beam, and the CSI report is associated with a format 2 if the CSI-RS signal is measured from cycling network beams, wherein format 1 includes one or more of: a CSI format flag, CSI for one network beam or a dual network beam or zero padding, wherein format 2 includes one or more of: a CSI format flag, CSI-RS resource indexes, CRIs, for selected cycling network beams, rank indicator, RI, or channel quality indicator, CQI, for the selected cycling network beams or zero padding.

4. An apparatus of a base station operable to configure a multiple-input multiple-output, MIMO, scheme for a user equipment, UE (120), in a massive MIMO system, the base station (110) comprising:

one or more processors configured to:

select (1110), at the base station (110), the MIMO scheme for the UE (120), encode (1120), at the base station (110), a channel state information reference signal, CSI-RS, for transmission to the UE (120), encode (1130), at the base station (110), downlink control information, DCI, for transmission to the UE (120) that triggers the CSI-RS, wherein the DCI includes a MIMO scheme indicator that indicates the selected MIMO scheme for the UE (120), wherein the DCI enables the UE (120) to perform a channel state information, CSI, measurement using the selected MIMO scheme; decode (1140), at the base station (110), a CSI report of the CSI measurement received from the UE (120), and encode (1150), at the base station (110), an extended physical downlink shared channel, xPDSCH, for transmission to the UE (120) in a selected subframe, wherein the xPDSCH is prepared for transmission at the base station (110) using the selected MIMO scheme for the UE (120), and

a memory interface configured to send to a memory an indication of the selected MIMO scheme.

5. The apparatus of claim 4, wherein the one or more processors are further configured to:

select an analog beam cycling scheme as the selected MIMO scheme when a Doppler frequency offset is increased based on an estimated UE (120) moving speed, wherein the estimated UE (120) moving speed is determined based on an uplink reference signal; or select a transmit diversity or large delay cyclic delay diversity, CDD, scheme as the selected MIMO scheme when a beam reference signal receiving power, BRS-RP, is reduced, thereby indicating that the UE (120) is possibly located at a cell edge.

6. The apparatus of any of claims 4 to 5, wherein the MIMO scheme indicator includes:

a first value to denote that the selected MIMO scheme for the UE (120) for CSI measurement is a closed-loop MIMO scheme that utilizes closed-loop spatial multiplexing; a second value to denote that the selected MIMO scheme for the UE (120) for CSI measurement is an open-loop MIMO scheme that utilizes transmit diversity or large delay cyclic delay diversity, CDD; or a third value to denote that the selected MIMO scheme for the UE (120) for CSI measurement is an open-loop MIMO scheme that utilizes analog beam cycling.

7. An apparatus of a base station operable to configure one or more multiple-input multiple-output, MIMO, schemes for a user equipment, UE (120), in a massive MIMO system, the base station (110) comprising:

one or more processors configured to:

identify (1210), at the base station (110), one or more candidate MIMO schemes for the UE (120); encode (1220), at the base station (110), a channel state information reference signal, CSI-RS, for transmission to the UE (120); encode (1230), at the base station (110), downlink control information, DCI, for transmission to the UE (120) that triggers the CSI-RS, wherein the DCI includes a MIMO scheme restriction indicator that indicates the one or more candidate MIMO schemes selected for the UE (120), wherein the DCI enables the UE (120) to perform a separate channel state information, CSI, measurement using each of the one or more candidate MIMO schemes selected for the UE (120); decode (1240), at the base station (110), one or more CSI measurements received from the UE (120) that are derived using the one or more candidate MIMO schemes selected for the UE (120); select (1250), at the base station (110), a single MIMO scheme for the UE (120) based on the one or more CSI measurements received from the UE (120); and encode (1260), at the base station (110), an extended physical downlink shared channel, XPDSCH, for transmission to the UE (120) in a selected subframe, wherein the XPDSCH is prepared for transmission at the base station (110) using the single MIMO scheme selected for the UE (120); and

a memory interface configured to send to a memory an indication of the single MIMO scheme selected for the UE (120).

8. The apparatus of claim 7, wherein:

the one or more candidate MIMO schemes indicated in the DCI correspond to all MIMO schemes that are supported at the base station (110) and the UE (120); or
the one or more candidate MIMO schemes indicated in the DCI correspond to a subset of all MIMO schemes that are supported at the base station (110) and the UE (120); or
the MIMO scheme restriction indicator is a selected value to denote that the one or more candidate MIMO schemes selected for the UE (120) includes one or more of: a closed-loop MIMO scheme that utilizes closed-loop spatial multiplexing, an open-loop MIMO scheme that utilizes transmit diversity or large delay cyclic delay diversity, CDD, or an open-loop MIMO scheme that utilizes analog beam cycling.

**Patentansprüche**

1. Vorrichtung einer Benutzervorrichtung (user equipment), UE (120), die betreibbar ist, um ein Mehrfacheingangs-Mehrfachausgangs-Schema, MIMO-Schema, für ein massives MIMO-System auszuwählen, wobei das UE (120) Folgendes umfasst:
einen oder mehrere Prozessoren, die konfiguriert sind zum:

Decodieren (1010), an der UE (120), eines Kanalzustandsinformations-Referenzsignals, CSI-RS, das von einer Basisstation (110) empfangen wird;
Durchführen (1020), an der UE (120), einer oder mehrerer Kanalzustandsinformations-Messungen, CSI-Messungen, an dem CSI-RS-Signal unter Verwendung verschiedener MIMO-Schemata;
Identifizieren (1030), an der UE (120), eines empfohlenen MIMO-Schemas basierend auf der einen oder den mehreren CSI-Messungen unter Verwendung der verschiedenen MIMO-Schemata;
Codieren (1040), an der UE (120), eines CSI-Berichts der einen oder der mehreren CSI-Messungen mit dem empfohlenen MIMO-Schema zur Übertragung an die Basisstation; und
Decodieren (1050), an der UE (120), eines erweiterten gemeinsam genutzten physikalischen Downlink-Kanals, xPDSCH, der von der Basisstation (110) in einem ausgewählten Subframe empfangen wird,
wobei der xPDSCH an der Basisstation (110) gemäß dem empfohlenen MIMO-Schema, das von der UE (120) empfangen wird, vorbereitet wird; und
eine Speicherschnittstelle, die konfiguriert ist zum Senden einer Anzeige des empfohlenen MIMO-Schemas an einen Speicher.

2. Vorrichtung nach Anspruch 1,
wobei der eine oder die mehreren Prozessoren ferner konfiguriert sind zum:

Identifizieren eines MIMO-Schemas mit offenem Regelkreis als das empfohlene MIMO-Schema, wenn ein Frequenzversatz aufgrund einer erhöhten Bewegungsgeschwindigkeit erhöht wird; oder
Identifizieren eines MIMO-Schemas mit geschlossenem Regelkreis als das empfohlene MIMO-Schema, wenn der Frequenzversatz verringert wird und ein Signal-Rausch-Verhältnis, SINR, erhöht wird.

3. Vorrichtung nach einem der Ansprüche 1 bis 2, wobei:
der CSI-Bericht mit einem Format 1 assoziiert ist, wenn das CSI-RS-Signal von einem bestimmten Netzwerkstrahl gemessen wird, und der CSI-Bericht mit einem Format 2 assoziiert ist, wenn das CSI-RS-Signal von zyklischen Netzwerkstrahlen gemessen wird, wobei das Format 1 eines oder mehrere von Folgendem beinhaltet: ein CSI-Format-Flag, CSI für einen Netzwerkstrahl oder einen dualen Netzwerkstrahl oder Nullfüllung, wobei das Format 2 eines oder mehrere von Folgendem beinhaltet: ein CSI-Format-Flag, CSI-RS-Ressourcenindizes, CRIs, für ausgewählte zyklische Netzwerkstrahlen, Rangindikator, RI, oder Kanalqualitätsindikator, CQI, für die ausgewählten zyklischen Netzwerkstrahlen oder Nullfüllung.

4. Vorrichtung einer Basisstation, die betreibbar ist, um ein Mehrfacheingangs-Mehrfachausgangs-Schema, MIMO-Schema, für eine Benutzervorrichtung, UE (120), in einem massiven MIMO-System zu konfigurieren, wobei die Basisstation (110) Folgendes umfasst:

einen oder mehrere Prozessoren, die konfiguriert sind zum:

Auswählen (1110), an der Basisstation (110), des MIMO-Schemas für die UE (120),
Codieren (1120), an der Basisstation (110), eines Kanalzustandsinformations-Referenzsignals, CSI-RS, zur Übertragung an die UE (120),
Codieren (1130), an der Basisstation (110), von Downlink-Steuerinformationen, DCI, zur Übertragung an die UE (120), die das CSI-RS auslösen, wobei die DCI einen MIMO-Schema-Indikator beinhalten, der das ausgewählte MIMO-Schema für die UE (120) anzeigt, wobei die DCI es der UE (120) ermöglichen, eine Kanalzustandsinformations-Messung, CSI-Messung, unter Verwendung des ausgewählten MIMO-Schemas durchzuführen;

Decodieren (1140), an der Basisstation (110), eines CSI-Berichts der CSI-Messung, die von der UE (120) empfangen wird, und

Codieren (1150), an der Basisstation (110), eines erweiterten gemeinsam genutzten physikalischen Downlink-Kanals, xPDSCH, zur Übertragung an die UE (120) in einem ausgewählten Subframe, wobei der xPDSCH zur Übertragung an der Basisstation (110) unter Verwendung des ausgewählten MIMO-Schemas für die UE (120) vorbereitet wird, und

eine Speicherschnittstelle, die konfiguriert ist zum Senden einer Anzeige des ausgewählten MIMO-Schemas an einen Speicher.

5. Vorrichtung nach Anspruch 4, wobei der eine oder die mehreren Prozessoren ferner konfiguriert sind zum:
Konfigurieren zum:

Auswählen eines analogen Strahlzyklusschemas als das ausgewählte MIMO-Schema, wenn ein Doppler-Frequenzversatz basierend auf einer geschätzten Bewegungsgeschwindigkeit der UE (120) erhöht wird, wobei die geschätzte Bewegungsgeschwindigkeit der UE (120) basierend auf einem Uplink-Referenzsignal bestimmt wird; oder

Auswählen eines Sendediversitäts- oder zyklischen Verzögerungsdiversitäts-Schemas mit großer Verzögerung, CDD-Schemas, als das ausgewählte MIMO-Schema, wenn eine Strahlreferenzsignal-Empfangsleistung, BRS-RP, reduziert wird, wodurch angezeigt wird, dass sich die UE (120) möglicherweise an einem Zellenrand befindet.

6. Vorrichtung nach einem der Ansprüche 4 bis 5, wobei der MIMO-Schema-Indikator Folgendes beinhaltet:

einen ersten Wert, um anzugeben, dass das ausgewählte MIMO-Schema für die UE (120) zur CSI-Messung ein MIMO-Schema mit geschlossener Schleife ist, das räumliches Multiplexen mit geschlossener Schleife verwendet;

einen zweiten Wert, um anzugeben, dass das ausgewählte MIMO-Schema für die UE (120) zur CSI-Messung ein MIMO-Schema mit offener Schleife ist, das Sendediversitäts- oder zyklische Verzögerungsdiversitäts-Schema mit großer Verzögerung, CDD-Schema, verwendet; oder

einen dritten Wert, um anzugeben, dass das ausgewählte MIMO-Schema für die UE (120) zur CSI-Messung ein MIMO-Schema mit offener Schleife ist, das analoges Strahlzyklieren verwendet.

7. Vorrichtung einer Basisstation, die betreibbar ist, um ein oder mehrere Mehrfacheingangs-Mehrfachausgangs-Schema, MIMO-Schema, für ein massives MIMO-System in einem massiven MIMO-System zu konfigurieren, wobei die Basisstation (110) Folgendes umfasst:
eine Basisstation (110), die betreibbar ist, um ein Mehrfacheingangs-Mehrfachausgangs-Schema, MIMO-Schema, für ein

einen oder mehrere Prozessoren, die konfiguriert sind zum:

Identifizieren (1210), an der Basisstation (110), eines oder mehrerer MIMO-Kandidatenschemata für die UE (120);

Codieren (1220), an der Basisstation (110), eines Kanalzustandsinformations-Referenzsignals, CSI-RS, zur Übertragung an die UE (120);

Codieren (1230), an der Basisstation (110), von Downlink-Steuerinformationen, DCI, zur Übertragung an die UE (120), die das CSI-RS auslösen, wobei die DCI einen MIMO-Schema-Einschränkungsindikator beinhalten, der das eine oder die mehreren MIMO-Kandidatenschemata anzeigt, die für die UE (120) ausgewählt sind, wobei die DCI es der UE (120) ermöglichen, eine separate Kanalzustandsinformations-Messung, CSI-Messung, unter Verwendung jedes des einen oder der mehreren MIMO-Kandidatenschemata durchzuführen, die für die UE (120) ausgewählt sind;

Decodieren (1240), an der Basisstation (110), einer oder mehrerer CSI-Messungen, die von der UE (120) empfangen werden, die unter Verwendung des einen oder der mehreren MIMO-Kandidatenschemata abgeleitet werden, die für die UE (120) ausgewählt sind;

Auswählen (1250), an der Basisstation (110), eines einzelnen MIMO-Schemas für die UE (120) basierend auf der einen oder den mehreren CSI-Messungen, die von der UE (120) empfangen werden; und Codieren (1260), an der Basisstation (110), eines erweiterten gemeinsam genutzten physikalischen Downlink-Kanals, XPDSCH, zur Übertragung an die UE (120) in einem ausgewählten Subframe, wobei der XPDSCH zur Übertragung an der Basisstation (110) unter Verwendung des einzelnen MIMO-Schemas vorbereitet wird, das für die UE (120) ausgewählt ist; und

eine Speicherschnittstelle, die konfiguriert ist zum Senden einer Anzeige des einzelnen MIMO-Schemas, das für die UE (120) ausgewählt ist, an einen Speicher.

**8.** Vorrichtung nach Anspruch 7, wobei:

das eine oder die mehreren MIMO-Kandidatenschemata, die in den DCI angezeigt sind, allen MIMO-Schemata entsprechen, die an der Basisstation (110) und der UE (120) unterstützt werden; oder das eine oder die mehreren MIMO-Kandidatenschemata, die in den DCI angezeigt sind, einer Teilmenge aller MIMO-Schemata entsprechen, die an der Basisstation (110) und der UE (120) unterstützt werden; oder der MIMO-Schemabeschränkungsindikator ein ausgewählter Wert ist, um anzugeben, dass das eine oder die mehreren MIMO-Kandidatenschemata, die für die UE (120) ausgewählt sind, eines oder mehrere von Folgendem beinhalten: ein MIMO-Schema mit geschlossener Schleife, das räumliches Multiplexen mit geschlossener Schleife verwendet, ein MIMO-Schema mit offener Schleife, das Sendediversitäts- oder zyklische Verzögerungsdiversitäts-Schema mit großer Verzögerung, CDD-Schema, verwendet, oder ein MIMO-Schema mit offener Schleife, das analoges Strahlzyklieren verwendet.

## Revendications

**1.** Un appareil d'un équipement utilisateur, UE (120), servant à sélectionner un schéma à entrées multiples et sorties multiples, MIMO, pour un système MIMO massif, l'UE (120) comprenant :

un ou plusieurs processeurs configurés pour :

décoder (1010), au niveau de l'UE (120), au moins un signal de référence d'information d'état de canal, CSI-RS, reçu en provenance d'une station de base (110) ; réaliser (1020), au niveau de l'UE (120), une ou plusieurs mesures d'information d'état de canal, CSI, sur le signal CSI-RS à l'aide de différents schémas MIMO ; identifier (1030), au niveau de l'UE (120), un schéma MIMO recommandé, sur la base des une ou plusieurs mesures CSI à l'aide des différents schémas MIMO ; coder (1040), au niveau de l'UE (120), un rapport CSI des une ou plusieurs mesures CSI avec le schéma MIMO recommandé pour une émission vers la station de base ; et décoder (1050), au niveau de l'UE (120), un canal partagé de liaison descendante physique étendu, xPDSCH, reçu en provenance de la station de base (110) dans une sous-trame sélectionnée, dans lequel le xPDSCH est préparé au niveau de la station de base (110) conformément au schéma MIMO recommandé reçu en provenance de l'UE (120) ; et

une interface mémoire configurée pour envoyer à une mémoire une indication du schéma MIMO recommandé.

**2.** L'appareil selon la revendication 1, dans lequel les un ou plusieurs processeurs sont en outre configurés pour :

identifier un schéma MIMO en boucle ouverte comme étant le schéma MIMO recommandé quand un décalage en fréquence augmente lorsqu'augmente une vitesse de déplacement ; ou identifier un schéma MIMO en boucle fermée comme étant le schéma MIMO recommandé quand le décalage en fréquence diminue et un rapport signal/bruit, SINR, augmente.

**3.** L'appareil selon l'une des revendications 1 à 2, dans lequel : le rapport CSI est associé à un format 1 si le signal CSI-RS est mesuré à partir d'un faisceau de réseau particulier, et le rapport CSI est associé à un format 2 si le signal CSI-RS est mesuré à partir de faisceaux de réseau cycliques, dans lequel le format 1 inclut un ou plusieurs parmi : un marqueur de format CSI, une CSI pour un seul faisceau de réseau ou un double faisceau de réseau ou un remplissage par des zéros, dans lequel le format 2 inclut l'un ou plusieurs parmi : un marqueur de format CSI, des indices de ressources CSI-RS, CRI, pour des faisceaux de réseau cycliques sélectionnés, un indicateur de rang, RI ou un indicateur de qualité de canal, CQI, pour les faisceaux de réseau cycliques sélectionnés ou le remplissage par des zéros sélectionné.

**4.** Un appareil d'une station de base servant à configurer un schéma à entrées multiples et sorties multiples, MIMO, pour un équipement utilisateur, UE (120), dans un système MIMO massif, la station de base (110) comprenant :

un ou plusieurs processeurs configurés pour :

sélectionner (1110), au niveau de la station de base (110), le schéma MIMO pour l'UE (120),

coder (1120), au niveau de la station de base (110), un signal de référence d'information d'état de canal, CSI-RS, pour une émission vers l'UE (120),

coder (1130), au niveau de la station de base (110), une information de contrôle de liaison descendante, DCI, pour une émission vers l'UE (120) qui déclenche le CSI-RS, dans lequel la DCI inclut un indicateur de schéma MIMO qui indique le schéma MIMO sélectionné pour l'UE (120), dans lequel la DCI permet à l'UE (120) de réaliser une mesure d'information d'état de canal, CSI, à l'aide du schéma MIMO sélectionné ;

décoder (1140), au niveau de la station de base (110), un rapport CSI de la mesure CSI, reçu en provenance de l'UE (120), et

coder (1150), au niveau de la station de base (110), un canal partagé de liaison descendante physique étendu, xPDSCH, pour une émission vers l'UE (120) dans une sous-trame sélectionnée, dans lequel le xPDSCH est préparé pour une émission au niveau de la station de base (110) à l'aide du schéma MIMO sélectionné pour l'UE (120), et

une interface mémoire configurée pour envoyer à une mémoire une indication du schéma MIMO sélectionné.

**5.** L'appareil selon la revendication 4, dans lequel les un ou plusieurs processeurs sont en outre configurés pour :

sélectionner un schéma de cyclage de faisceau analogique comme étant le schéma MIMO sélectionné lorsqu'un décalage en fréquence Doppler est accru sur la base d'une vitesse de déplacement d'UE (120) estimée, dans lequel la vitesse de déplacement d'UE (120) estimée est déterminée sur la base d'un signal de référence de liaison montante ; ou

sélectionner un schéma de diversité de retard cyclique, CDD, à diversité d'émission ou à grand retard comme étant le schéma MIMO sélectionné lorsqu'une puissance de réception de signal de référence de faisceau, BRS-RP, est réduite, ce qui indique que l'UE (120) est possiblement situé au niveau d'un bord de cellule.

**6.** L'appareil selon l'une des revendications 4 à 5, dans lequel l'indicateur de schéma MIMO inclut :

une première valeur pour représenter que le schéma MIMO sélectionné pour l'UE (120) pour une mesure CSI est un schéma MIMO en boucle fermée qui utilise un multiplexage spatial en boucle fermée ;

une deuxième valeur pour représenter que le schéma MIMO sélectionné pour l'UE (120) pour une mesure CSI est un schéma MIMO en boucle ouverte qui utilise une diversité de retard cyclique, CDD, à diversité d'émission ou à grand retard ; ou

une troisième valeur pour représenter que le schéma MIMO sélectionné pour l'UE (120) pour une mesure CSI est un schéma MIMO en boucle ouverte qui utilise un cyclage de faisceau analogique.

**7.** Un appareil d'une station de base servant à configurer un ou plusieurs schémas à entrées multiples et sorties multiples, MIMO, pour un équipement utilisateur, UE (120), dans un système MIMO massif, la station de base (110) comprenant :

un ou plusieurs processeurs configurés pour :

identifier (1210), au niveau de la station de base (110), un ou plusieurs schémas MIMO candidats pour l'UE (120) ;

coder (1220), au niveau de la station de base (110), un signal de référence d'information d'état de canal, CSI-RS, pour une émission vers l'UE (120) ;

coder (1230), au niveau de la station de base (110), une information de contrôle de liaison descendante, DCI, pour une émission vers l'UE (120) qui déclenche le CSI-RS, dans lequel la DCI inclut un indicateur de restriction de schéma MIMO qui indique les un ou plusieurs schémas MIMO candidats sélectionnés pour l'UE (120), dans lequel la DCI permet à l'UE (120) de réaliser une mesure d'information d'état de canal, CSI, séparée à l'aide de chacun des un ou plusieurs schémas MIMO candidats sélectionnés pour l'UE (120) ;

décoder (1240), au niveau de la station de base (110), une ou plusieurs mesures CSI reçues en provenance de l'UE (120) qui sont déduites à l'aide des un ou plusieurs schémas MIMO candidats sélectionnés pour l'UE (120) ;

sélectionner (1250), au niveau de la station de base (110), un unique schéma MIMO pour l'UE (120) sur la base des une ou plusieurs mesures CSI reçues en provenance de l'UE (120) ; et

coder (1260), au niveau de la station de base (110), un canal partagé de liaison descendante physique étendu, XPDSCH, pour une émission vers l'UE (120) dans une sous-trame sélectionnée, dans lequel le XPDSCH est préparé pour une émission au niveau de la station de base (110) à l'aide de l'unique schéma MIMO sélectionné pour l'UE (120) ; et

une interface mémoire configurée pour envoyer à une mémoire une indication de l'unique schéma MIMO sélectionné pour l'UE (120).

8. L'appareil selon la revendication 7, dans lequel :

les un ou plusieurs schémas MIMO candidats indiqués dans la DCI correspondent à tous les schémas MIMO qui sont pris en charge au niveau de la station de base (110) et de l'UE (120) ; ou

les un ou plusieurs schémas MIMO candidats indiqués dans la DCI correspondent à un sous-ensemble de tous les schémas MIMO qui sont pris en charge au niveau de la station de base (110) et de l'UE (120) ; ou

l'indicateur de restriction de schéma MIMO est une valeur sélectionnée pour représenter que les un ou plusieurs schémas MIMO candidats sélectionnés pour l'UE (120) incluent l'un ou plusieurs parmi : un schéma MIMO en boucle fermée qui utilise un multiplexage spatial en boucle fermée, un schéma MIMO en boucle ouverte qui utilise une diversité de retard cyclique, CDD, à diversité d'émission ou à grand retard, ou un schéma MIMO en boucle ouverte qui utilise un cyclage de faisceau analogique.

FIG. 1

| Interference Management Flag | Indication |
|:---:|:---:|
| 0 | No interference measurement and interference averaging stops |
| 1 | No interference measurement and interference averaging continues |
| 2 | Interference measurement is enabled and interference averaging stops |
| 3 | Interference measurement is enabled and interference averaging continues |

FIG. 2

IMF=1    IMF=1  IMF=1      IMF=0  IMF=1
IAF=1     IAF=1   IAF=1      IAF=1   IAF=0

|  |  | xPDSCH subframe |
|---|---|---|

| 0 | 1 | 2 | 3 | 4 | 5 | 6 | 7 |

Interference averaging from subframe 0, 2, 3 and 6

IMF = Interference Measurement Flag in DCI

IAF = Interference Averaging Flag in DCI

FIG. 3

FIG. 4

| MIMO Scheme Indicator | MIMO Scheme for CSI Measurement |
|---|---|
| 0 | Closed-loop Spatial Multiplexing |
| 1 | Transmit Diversity / Large Delay CDD |
| 2 | Analog Beam Cycling |
| 3 | Reserved |

## FIG. 5

FIG. 6

| MIMO Scheme Restriction Indicator | Indication |
|---|---|
| 0 | Closed-Loop Spatial Multiplexing |
| 1 | Transmit Diversity / Large Delay CDD |
| 2 | Analog Beam Cycling |
| 3 | Closed-Loop Spatial Multiplexing & Transmit Diversity / Large Delay CDD |
| 4 | Closed-Loop Spatial Multiplexing & Analog Beam Cycling |
| 5 | Transmit Diversity / Large Delay CDD & Analog Beam Cycling |
| 6 | Closed-Loop Spatial Multiplexing & Transmit Diversity / Large Delay CDD & Analog Beam Cycling |
| 7 | Reserved |

FIG. 7

```
┌─────────────┐                          ┌─────────────┐
│   eNodeB    │                          │     UE      │
│     810     │                          │     820     │
└─────────────┘                          └─────────────┘
       │                                        │
Configure MIMO                                  │
scheme restriction                              │
       │              CSI-RS                    │
       │───────────────────────────────────────▶│
       │                                        │
       │                                CSI measurement
       │                                with all possible
       │                                 MIMO schemes
       │                                        │
       │    CSI with one or more MIMO           │
       │             scheme                     │
       │◀───────────────────────────────────────│
       │                                        │
Select one MIMO                                 │
scheme                                          │
       │                                        │
       │              xPDSCH                    │
       │───────────────────────────────────────▶│
       │                                        │
       │                                        │
```

FIG. 8

33

900

Decode, at the UE, downlink control information (DCI) received from a base station, wherein the DCI is associated with an extended physical downlink shared channel (xPDSCH) in a selected subframe — 910

Perform, in response to the DCI received from the base station, an interference measurement based on the xPDSCH in the selected subframe — 920

Determine, at the UE, an interference level indicator (ILI) for the selected subframe based on the interference measurement — 930

Encode, at the UE, the ILI for transmission to the base station — 940

FIG. 9

1000 ⌐

Decode, at the UE, a channel state information reference signal (CSI-RS) received from a base station ~ 1010

Perform, at the UE, one or more channel state information (CSI) measurements ~ 1020

Identify, at the UE, a recommended MIMO scheme based on the one or more CSI measurements ~ 1030

Encode, at the UE, a CSI measurement for transmission to the base station with the recommended MIMO scheme ~ 1040

Decode, at the UE, an extended physical downlink shared channel (xPDSCH) received from the base station in a selected subframe, wherein the xPDSCH is prepared at the base station in accordance with the recommended MIMO scheme received from the UE ~ 1050

FIG. 10

1100

Select, at the base station, the MIMO scheme for the UE 〜 1110

Encode, at the base station, a channel state information reference signal (CSI-RS) for transmission to the UE 〜 1120

Encode, at the base station, downlink control information (DCI) for transmission to the UE that triggers the CSI-RS, wherein the DCI includes a MIMO scheme indicator that indicates the selected MIMO scheme for the UE, wherein the DCI enables the UE to perform a channel state information (CSI) measurement using the selected MIMO scheme 〜 1130

Decode, at the base station, the CSI measurement received from the UE 〜 1140

Encode, at the base station, an extended physical downlink shared channel (xPDSCH) for transmission to the UE in a selected subframe, wherein the xPDSCH is prepared for transmission at the base station using the selected MIMO scheme for the UE 〜 1150

FIG. 11

1200 ⟍

Identify, at the base station, one or more candidate MIMO schemes for the UE — 1210

↓

Encode, at the base station, a channel state information reference signal (CSI-RS) for transmission to the UE — 1220

↓

Encode, at the base station, downlink control information (DCI) for transmission to the UE that triggers the CSI-RS, wherein the DCI includes a MIMO scheme restriction indicator that indicates the one or more candidate MIMO schemes selected for the UE, wherein the DCI enables the UE to perform a separate channel state information (CSI) measurement using each of the one or more candidate MIMO schemes selected for the UE — 1230

↓

Decode, at the base station, one or more CSI measurements received from the UE that are derived using the one or more candidate MIMO schemes selected for the UE — 1240

↓

Select, at the base station, a single MIMO scheme for the UE based on the one or more CSI measurements received from the UE — 1250

↓

Encode, at the base station, an extended physical downlink shared channel (xPDSCH) for transmission to the UE in a selected subframe, wherein the xPDSCH is prepared for transmission at the base station using the single MIMO scheme selected for the UE — 1260

FIG. 12

FIG. 13

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Further Discussion on DL/UL Signaling Channel Supporting Rank Adaptation for High Mobility UE. *3GPP DRAFT; R1-080769*